(19) Europäisches Patentamt / European Patent Office / Office européen des brevets

(11) **EP 2 774 194 B1**

(12) **FASCICULE DE BREVET EUROPEEN**

(45) Date de publication et mention
de la délivrance du brevet:
**03.05.2017 Bulletin 2017/18**

(21) Numéro de dépôt: **12794400.7**

(22) Date de dépôt: **30.10.2012**

(51) Int Cl.:
*H01M 4/04* *(2006.01)*    *H01M 4/1391* *(2010.01)*
*H01M 4/505* *(2010.01)*    *H01M 4/525* *(2010.01)*
*H01M 4/58* *(2010.01)*

(86) Numéro de dépôt international:
**PCT/FR2012/052498**

(87) Numéro de publication internationale:
**WO 2013/064773 (10.05.2013 Gazette 2013/19)**

(54) **PROCEDE DE FABRICATION D'ELECTRODES DE BATTERIES ENTIEREMENT SOLIDES**

VERFAHREN ZUR HERSTELLUNG VON ELEKTRODEN FÜR VOLLFESTKÖRPERBATTERIEN

METHOD FOR THE PRODUCTION OF ELECTRODES FOR FULLY SOLID BATTERIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.11.2011 FR 1159896**

(43) Date de publication de la demande:
**10.09.2014 Bulletin 2014/37**

(73) Titulaire: **I-TEN
69410 Champagne-au-Mont-d'Or (FR)**

(72) Inventeurs:
• **BOUYER, Frédéric**
  **F-21160 Perrigny Les Dijon (FR)**
• **VUILLEMIN, Bruno**
  **F-39230 Darbonnay (FR)**
• **GABEN, Fabien**
  **F-69130 Ecully (FR)**

(74) Mandataire: **Schmidt, Martin Peter
IXAS Conseil
15, rue Emile Zola
69002 Lyon (FR)**

(56) Documents cités:
**US-A1- 2007 048 611    US-A1- 2007 184 345
US-A1- 2009 053 589    US-B1- 6 607 645**

• **DATABASE WPI Week 197642 Thomson
Scientific, London, GB; AN 1976-78769X
XP002677962, & SU 498 666 A1 (ROZOVSKII V M)
19 mars 1976 (1976-03-19)**

• **DOR S ET AL: "The influence of suspension
composition and deposition mode on the
electrophoretic deposition of TiO2 nanoparticle
agglomerates", COLLOIDS AND SURFACES. A,
PHYSICACHEMICAL AND ENGINEERING
ASPECTS, ELSEVIER, AMSTERDAM, NL, vol.
342, no. 1-3, 15 juin 2009 (2009-06-15), pages
70-75, XP026127671, ISSN: 0927-7757, DOI:
10.1016/J.COLSURFA.2009.04.009 [extrait le
2009-04-15]**

• **CABALLERO A ET AL: "LiNi0.5Mn1.5O4
thick-film electrodes prepared by electrophoretic
deposition for use in high voltage lithium-ion
batteries", JOURNAL OF POWER SOURCES,
ELSEVIER SA, CH, vol. 158, no. 1, 14 juillet 2006
(2006-07-14), pages 583-590, XP027938987, ISSN:
0378-7753 [extrait le 2006-07-14]**

• **FERRARI ET AL: "EPD of thick films for their
application in lithium batteries", JOURNAL OF
THE EUROPEAN CERAMIC SOCIETY, ELSEVIER
SCIENCE PUBLISHERS, BARKING, ESSEX, GB,
vol. 27, no. 13-15, 1 janvier 2007 (2007-01-01),
pages 3823-3827, XP022143643, ISSN: 0955-2219,
DOI: 10.1016/J.JEURCERAMSOC.2007.02.051**

- IMAHORI H ET AL: "Structure and photoelectrochemical properties of nanostructured SnO2 electrodes deposited electrophoretically with the composite clusters of porphyrin-modified gold nanoparticle with a long spacer and fullerene", TETRAHEDRON, ELSEVIER SCIENCE PUBLISHERS, AMSTERDAM, NL, vol. 62, no. 9, 27 février 2006 (2006-02-27), pages 1955-1966, XP025001590, ISSN: 0040-4020, DOI: 10.1016/J.TET.2005.05.109 [extrait le 2006-02-27]

## Description

### Domaine de l'invention

La présente invention appartient au domaine des batteries et notamment des batteries à ions de lithium. Elle concerne plus particulièrement les électrodes de batteries à ions de lithium entièrement solides, et un nouveau procédé de fabrication de telles électrodes de batteries.

### État de la technique

La batterie idéale pour l'alimentation des dispositifs électriques autonomes (tels que : téléphone et ordinateurs portables, outils portatifs, capteurs autonomes) ou bien pour la traction des véhicules électriques présenterait une durée de vie élevée, serait capable de stocker à la fois de grandes quantités d'énergie et de puissance, et ne présenterait pas de risque de surchauffe voire d'explosion.

Actuellement ces dispositifs électriques sont alimentés essentiellement par des batteries à ions de lithium (appelées ici « batteries Li-ion »), qui présentent la meilleure densité d'énergie parmi les différentes technologies de stockage proposées. Cependant, il existe différentes architectures et compositions chimiques d'électrodes permettant de réaliser des batteries Li-ion.

Les modes de fabrication des batteries Li-ion sont présentés dans de nombreux articles et brevets, et l'ouvrage « Advances in Lithium-Ion Batteries » (ed. W. van Schalkwijk et B. Scrosati), paru en 2002 (Kluever Academic / Plenum Publishers) en donne un bon état des lieux.

Les électrodes des batteries Li-ion peuvent être fabriquées à l'aide de techniques de revêtement (notamment : roll coating, doctor blade, tape casting). Avec ces procédés, les matériaux actifs servant à réaliser les électrodes sont sous forme de poudres dont la taille moyenne des particules se situe entre 5 et 15 $\mu$m de diamètre. Ces particules sont intégrées dans une encre qui est constituée de ces particules et déposée à la surface d'un substrat.

Ces techniques permettent de réaliser des dépôts d'épaisseurs comprises entre 50 et 400 $\mu$m. En fonction de l'épaisseur des dépôts, de leurs porosités et de la taille des particules actives, la puissance et énergie de la batterie peuvent être modulées.

Les encres (ou pâtes) déposées pour former les électrodes contiennent des particules de matériaux actifs, mais également des liants (organiques), de la poudre de carbone permettant d'assurer le contact électrique entre les particules, et des solvants qui sont évaporés lors de l'étape de séchage des électrodes. Pour améliorer la qualité des contacts électriques entre les particules et compacter les dépôts, une étape de calandrage est réalisée sur les électrodes. Après cette étape de compression, les particules actives des électrodes occupent environ 60% du volume du dépôt, ce qui signifie qu'il reste généralement 40% de porosités entre les particules.

Le contact entre chacune des particules est essentiellement ponctuel et la structure de l'électrode est poreuse. Les porosités sont remplies par un électrolyte, qui peut être liquide (solvant aprotique dans lequel un sel de lithium est dissous) ou sous forme de gel plus ou moins polymérisé imprégné d'un sel de lithium. Les épaisseurs des électrodes de batteries li-ion étant généralement comprises entre 50 et 400 $\mu$m, le transport des ions lithium dans l'épaisseur de l'électrode s'effectue via les porosités qui sont remplies d'électrolyte (contenant des sels de lithium). En fonction de la quantité et de la taille des porosités, la vitesse de diffusion du lithium dans l'épaisseur de l'électrode varie.

Pour assurer le bon fonctionnement de la batterie, les ions lithium doivent diffuser à la fois dans l'épaisseur de la particule et dans l'épaisseur de l'électrode (ie. du revêtement). La diffusion dans la particule de matériau actif, est plus lente que dans l'électrolyte. Aussi, pour garantir de bonnes performances en puissances des batteries, la taille des particules doit être réduite, et dans les batteries li-ion standard elle se situe entre 5 et 15 $\mu$m.

D'autre part, en fonction de l'épaisseur des dépôts, des tailles et densité de particules actives contenues dans l'encre, les puissances et énergies de la batterie peuvent être modulées. L'augmentation des densités d'énergie se fait nécessairement au détriment de la densité de puissance. Les cellules batterie de fortes puissances nécessitent d'utiliser des électrodes et séparateurs de faibles épaisseurs et très poreux, alors que l'accroissement de la densité d'énergie demande au contraire d'accroitre ces mêmes épaisseurs et de réduire le taux de porosité. L'article "Optimization of Porosity and Thickness of a Battery Electrode by Means of a Reaction-Zone Model" par John Newman, paru dans J. Electrochem. Soc., Vol. 142, No.1 en janvier 1995, démontre les effets respectifs des épaisseurs d'électrodes et de leur porosité sur leur régime de décharge (puissance) et densité d'énergie.

Cependant l'augmentation de la porosité dans les électrodes tend à détériorer la densité d'énergie de la batterie. Pour accroitre la densité d'énergie des électrodes, il est être nécessaire de réduire la porosité. Cependant, dans les batteries Li-ion actuelles, ce sont essentiellement les porosités remplies d'électrolyte situées entre les particules actives qui permettent d'assurer la diffusion des ions lithium dans l'électrode. En l'absence de porosités remplies d'électrolyte, le transport des ions lithium d'une particule à l'autre se fait uniquement au niveau des contacts entre les particules, ce contact étant sensiblement ponctuel. La résistance au transport des ions lithium est telle que la batterie ne peut pas fonctionner.

En outre, pour fonctionner convenablement, les porosités des électrodes doivent être remplies d'électrolyte. Ce remplissage n'est possible que si les porosités sont ouvertes. De plus, en fonction de la taille des porosités, de leur tortuosité, l'imprégnation de l'électrode avec l'électrolyte peut devenir très difficile, voire impossible. Lorsque le taux de porosité, imprégné d'électrolyte, diminue, la résistance électrique du dépôt diminue et sa résistance ionique augmente. Lorsque la porosité descend en dessous de 30% voire 20%, la résistance ionique augmente fortement car certaines porosités sont alors susceptibles de se refermer, ce qui empêche le mouillage de l'électrode par l'électrolyte.

Par conséquent, dès lors que l'on cherche à réaliser des films d'électrodes sans porosités pour augmenter la densité d'énergie, il convient de limiter l'épaisseur de ces films à moins de 20 $\mu$m, et de préférence moins de 10 $\mu$m, afin de permettre la diffusion rapide des ions lithium dans le solide, sans perte de puissance.

Or, les techniques actuelles de dépôt décrites ci-dessus ne permettent pas de maîtriser précisément l'épaisseur de dépôt. De plus les extraits secs utilisés et les viscosités des encres associées ne permettent pas de descendre en dessous de 20 $\mu$m d'épaisseur.

Un autre mode de réalisation de films d'électrodes a été proposé. Il s'agit de déposer par voie sous vide un film mince de matériaux d'électrode à insertion du lithium. Cette technique permet d'obtenir des films denses, sans porosités, ayant par conséquent d'excellentes densités d'énergie, et tenues en températures.

L'absence de porosités permet d'assurer le transport des ions lithium par diffusion à travers le film, sans avoir recours à l'utilisation d'électrolytes organiques à base de polymères ou de solvant contenant des sels de lithium. De tels films peuvent recouvrir la totalité de l'électrode, y compris ses bords.

De tels films totalement inorganiques confèrent d'excellentes performances en vieillissement, sécurité et tenue en température.

Le dépôt par PVD est la technologie la plus utilisée actuellement pour la fabrication des microbatteries en couches minces. En effet, ces applications nécessitent des films exempts de porosité et d'autres défauts ponctuels pour garantir une faible résistivité électrique, et la bonne conduction ionique nécessaires au bon fonctionnement des dispositifs.

La vitesse de dépôt obtenue avec de telles technologies est de l'ordre de 0,1 $\mu$m à 1 $\mu$m par heure. Les techniques de dépôt PVD permettent d'obtenir des dépôts de très bonne qualité, ne contenant quasiment pas de défauts ponctuels, et permettent de réaliser des dépôts à des températures relativement faibles. Cependant, du fait de la différence de vitesse d'évaporation entre les différents éléments, il est difficile de déposer des alliages complexes avec de telles techniques, et de maîtriser la stoechiométrie du dépôt. Cette technique est parfaitement adaptée à la réalisation de couches minces, mais dès que l'on cherche à augmenter l'épaisseur de dépôt (a titre d'exemple des épaisseurs supérieures à 5 $\mu$m), des croissances colonnaires apparaissent, et le temps de dépôt devient trop important pour envisager une utilisation industrielle dans le domaine des microbatteries en couches minces.

De plus, les techniques de dépôt sous vide utilisées pour réaliser de tels films sont très couteuses et difficiles à mettre en oeuvre industriellement sur de larges surfaces, avec une productivité élevée.

Les autres technologies actuellement disponibles pour réaliser des couches minces, comprennent des modes de réalisation basés sur la densification de dépôts compacts de particules. Parmi ces techniques on peut citer la réalisation de dépôts par voie sol-gel. Cette technique consiste à déposer sur la surface d'un substrat un réseau polymérique obtenu après des étapes d'hydrolyse, polymérisation et condensation. La transition sol-gel apparait durant l'évaporation du solvant qui accélère les processus réactionnels en surface. Cette technique permet de réaliser des dépôts compacts de très faible épaisseur. Les films ainsi obtenus ont une épaisseur de l'ordre de la centaine de nanomètres. Ces épaisseurs sont alors trop faibles pour permettre un stockage d'énergie raisonnable dans les applications de batteries.

Pour accroître l'épaisseur du dépôt sans induire de risques d'apparition de fissures ou craquelures, il convient de procéder par étapes successives. De ce fait, cette technique pose des problèmes de productivité industrielle, dès lors que l'on cherche à augmenter l'épaisseur du dépôt.

Les techniques d'impression utilisant des encres fluides peuvent permettre de réaliser des dépôts minces. Cependant, la fluidité des encres dépend de la teneur en extraits secs, des tailles de particules, de la nature du solvant et d'éventuels composés organiques dissous dans cette encre. Pour réaliser des dépôts en couches minces, il est nécessaire de réduire l'extrait sec, et de ne pas avoir des tailles de particules trop faibles (des tailles supérieures à la centaine de nanomètres). En revanche, cette augmentation de la quantité de solvant conduit à accroitre les risques de former des fissures, cavités et agglomérats dans le dépôt, pendant les phases de séchage. Les dépôts deviennent alors extrêmement difficiles à compacter. La compaction finale du dépôt est obtenue par évaporation du solvant contenu dans l'encre. Cette étape de séchage est difficile à maitriser car les régions de plus faibles densités, avec des porosités localement plus faibles, sécheront plus vite que les zones de plus fortes densités. Les effets capillaires induits par ces différences locales de niveau de séchage conduiront les zones de plus fortes densités, encore imprégnées, à se regrouper. La densification de ces dépôts ne peut être effectuée qu'à l'aide de compaction sous de très fortes pressions (d'autant plus élevées que la taille des particules sera faibles) et/ou de frittage à des températures élevées, proches de la température de fusion du matériau constituant les particules.

Il est nécessaire de chauffer à des températures très élevées pour arriver à densifier la structure initialement poreuse. Les paliers de montée en température sont délicats à maitriser si l'on veut que le retreint liée au comblement de toutes ces porosités dans l'épaisseur du dépôt ne donne pas lieu à des fissures. De plus, tous les substrats ne supportent pas de telles températures.

Il existe enfin une dernière alternative pour le dépôt de matériaux en couches minces dans des dispositifs électrochimiques et en particulier les batteries. Il s'agit du dépôt de particules par électrophorèse. Par exemple, le brevet US 6,887,361 (University of California) décrit un procédé pour former une membrane poreuse céramique sur un substrat de dispositif électrochimique à l'état solide. Le dépôt est réalisé par électrophorèse d'une suspension de particules de céramique dans de l'alcool isopropylique, suivi d'un séchage et d'un frittage. Le procédé est applicable essentiellement aux piles à combustible à oxyde solide (SOFC). Dans ce brevet, on ne cherche pas à obtenir un film dense, exempt de porosités.

Les demandes de brevet US 2007/184345, WO 2007/061928, US 2008/286651 et WO 2010/011569 (Infinite Power Solutions) décrivent des dispositifs électrochimiques comprenant une cathode déposée par des techniques autres qu'un dépôt sous vide ; elles décrivent notamment le dépôt d'une couche cathodique par électrophorèse à partir d'une poudre de taille micronique de $LiCoO_2$ ; cette couche comporte cependant des cavités, et elle doit être densifiée par un frittage à haute température, proche de la température de fusion du matériau déposé. Les autres parties de la batterie sont obtenues par dépôt sous vide.

Le brevet US 7,790,967 (3G Solar Ltd) décrit également le dépôt d'une électrode nanoporeuse en $TiO_2$ par électrophorèse à partir d'une suspension de nanoparticules de $TiO_2$ ; L'épaisseur de l'électrode est de l'ordre de 10 $\mu$m.

Le brevet JP 4501247 (DENSO) décrit un procédé de fabrication d'une électrode pour une batterie dans lequel une couche d'un matériau actif est formée par électrophorèse. Plus précisément, ce brevet décrit un procédé dans lequel un collecteur de charge est plongé dans une solution comprenant une matière active dans un solvant, ce procédé étant une partie d'un procédé plus général de fabrication d'une électrode pour batterie. L'électrophorèse de ladite matière active contenue dans la solution s'effectue en générant un gradient de potentiel électrique dans cette solution, la matière active formant une couche de matériau actif sur la surface du collecteur, et adhérant à ladite surface de collecteur. La fabrication de cathodes pour batteries Li-ion par ce procédé est mentionnée. Les techniques employées pour réaliser l'anode et l'électrolyte ne sont pas indiquées. Les cathodes obtenues dans ce brevet sont poreuses.

## Objets de l'invention

Un premier but de l'invention consiste à réaliser des couches d'électrodes (anode et/ou cathode) pour batterie Li-ion, comportant peu de défauts.

Un autre but de l'invention est de fabriquer des couches d'électrode pour batterie Li-ion industriellement, à grande échelle, et sur de grandes surfaces à moindre cout.

Un autre but de l'invention est de réaliser des couches de grande précision géométrique, avec une très faible quantité de défauts et avec des vitesses de dépôt élevées, pouvant servir à la réalisation de films d'électrode pour batteries.

Ces buts sont atteints grâce à un procédé de fabrication d'une couche mince d'électrode (anode ou cathode) dans une batterie entièrement solide, comprenant les étapes successives de :

a) Approvisionnement d'un substrat,
b) Dépôt d'une couche d'électrode par électrophorèse, à partir d'une suspension contenant des particules de matériaux d'électrode, sur ledit substrat,
c) Séchage de la couche obtenue à l'étape précédente,
d) Densification thermique de la couche d'électrode obtenue à l'étape précédente par frittage, le frittage étant effectué à une température $T_R$ qui ne dépasse pas 0,7 fois la température de fusion (exprimée en °C), plus préférentiellement ne dépasse par 0,5 fois la température de fusion (exprimée en °C) et encore plus préférentiellement ne dépasse par 0,3 fois la température de fusion (exprimée en °C) du matériau d'électrode le plus fusible..

Le terme « température de fusion » inclut ici la température de décomposition pour le cas des substances qui n'ont pas de point de fusion.

Avantageusement, le procédé de fabrication d'électrode comprend en outre une étape de compaction mécanique (typiquement par compression) de la couche séchée, effectuée avant ou simultanément à l'étape de densification thermique. La combinaison de l'application d'une pression et d'un traitement thermique permet de réaliser la densification thermique à des températures plus basses que si elle est effectuée seule. De préférence, l'étape de compaction mécanique est réalisée par application d'une pression de compression comprise entre 20 et 100 MPa, et de préférence entre 40 et 60 MPa. Dans certains modes de réalisation toutefois la pression appliquée est supérieure à 250 MPa, voire supérieure à 400 MPa.

Dans certains modes de réalisation de l'invention, l'étape de densification thermique et/ou de compaction mécanique est réalisée sous vide, afin d'éviter l'oxydation du substrat métallique.

Ledit substrat peut être un substrat conducteur. La taille moyenne $D_{50}$ des particules de matériau d'électrode est inférieure à 100 nm et plus préférentiellement inférieure ou égale à 30 nm.

Ladite électrode peut être une anode ou une cathode.

De préférence, les nanoparticules utilisées pour la réalisation du film mince d'électrode, et notamment de <u>cathode</u> sont choisies, de manière non exhaustive, parmi un ou plusieurs des matériaux suivants :

- les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$, $LiMn_{1/3}Ni_{1/3}Co_{1/3}O_4$;
- les phosphates $LiFePO_4$, $LiMnPO_4$, $LiCoPO_4$, $LiNiPO_4$, $Li_3V_2(PO_4)_3$ ;
- toutes les formes lithiées des chalcogénides suivants : $V_2O_5$, $V_3O_8$, $TiS_2$, $TiO_yS_z$, $WO_yS_z$, CuS, $CuS_2$.

Ces matériaux permettent d'obtenir des couches de cathode ayant de très bonnes propriétés.

De préférence, les nanoparticules utilisées pour la réalisation du film mince d'électrode, et notamment d'anode sont choisies, de manière non exhaustive, parmi un ou plusieurs des matériaux suivants :

(i) les oxynitrures d'étain (de formule typique $SnO_xN_y$) ;

(ii) les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bOyN_zX_n$ avec Xn au moins un des éléments parmi F, Cl, Br, I, S, Se, Te, P, As, Sb, Bi, Ge, Pb.

(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;

(iv) les oxydes $SnO_2$, $Li_4Ti_5O_{12}$, $SnB_{0\cdot6}P_{0,4}O_{2,9}$.

Ces matériaux permettent d'obtenir des couches d'anode avec de très bonnes propriétés.

Avantageusement la couche d'électrode déposée a une épaisseur inférieure à 20 μm, de préférence inférieure à environ 10 μm, et encore plus préférentiellement inférieure à 5 μm.

Dans un mode de réalisation particulier, pour accroitre la conductivité électrique, des nanoparticules conductrices électriques peuvent être déposées conjointement avec les matériaux d'électrode.

Dans un autre mode de réalisation, pour accroitre la conductivité ionique des électrodes, des nanoparticules de matériaux conducteurs des ions lithium, plus fusibles que les particules d'électrodes peuvent être déposés simultanément aux particules de matériau d'électrode. Ce matériau plus fusible viendra lier les particules entre elles, assurant ainsi la continuité du chemin de diffusion des ions lithium. L'électrode est entièrement solide et les porosités entre les particules actives sont remplies par cette phase fusible.

Comme matériaux pouvant servir à assurer cette fonction de lien, on peut citer notamment :

(i) les composés lithiés à base d'oxynitrure de lithium et de phosphore (appelés LiPON) sous forme $Li_xPO_yN_z$ avec x -2,8 et 2y+3z -7,8 et 0,16 ≤ z ≤ 0,4, et en particulier le $Li_{2,9}PO_{3,3}N_{0,46}$, mais également toutes les variantes sous forme $Li_wPO_xN_yS_z$ avec 2x+3y+2z= 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,133≤v≤0,46, 0≤w≤0,2.

(ii) les composés lithiés à base d'oxynitrure de lithium, de phosphore et de silicium (appelés LiSiPON), et en particulier le $Li_{1,9}Si_{0,28}P_{1,0}O_{1,1}N_{1,0}$ ;

(iii) les oxynitrures de lithium de types LiBON, LiBSO, LiSiPON, LiSON, thio-LiSiCON, LiPONB (ou B, P et S représentent respectivement le bore, le phosphore et le soufre);

(iv) les composés $La_{0,51}Li_{0,34}Ti_{2,94}$, $Li_{3,4}V_{0,4}Geo_{0,6}O_4$, $Li_2O-Nb_2O_5$, $LiAlGaSPO_4$ ;

(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1-x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{1+x+z}M_x(Ge_{1-y}Ti_y)_{2\cdot x}Si_zP_{3-z}O_{12}$ (où 0 ≤ x ≤0,8 ; 0 ≤ y ≤ 1,0 ; 0 ≤ z ≤ 0,6), et en particulier les formulations 4,9Lil-34,1$Li_2O$-61$B_2O_3$, 0,30$Li_2S$-0,26$B_2S_3$-0,44Lil, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)-$AlPO_4$, 0,7$Li_2S$-0,3$P_2S_5$.

La réalisation d'électrodes, anode et/ou cathode, totalement inorganiques, sans ajout de sels de lithium ou autres liquides ioniques, dans lesquelles le transport des ions lithium est favorisé par l'ajout de telles nanoparticules de matériaux (céramiques et/ou vitrocéramiques) conductrices des ions lithium permet d'éviter les problèmes de corrosion sur les collecteurs de courant, de limiter la sensibilité à la température et à l'humidité des batteries comportant de telles électrodes, d'améliorer la durée de vie et la sécurité d'utilisation de ces batteries.

Dans d'autres modes de réalisation, il est possible d'utiliser des matériaux (essentiellement des polymères) contenant des sels de lithium pour assurer cette conduction des ions lithium. Ces sels de lithium peuvent être LiCl, LiBr, LiI, Li(ClO$_4$), Li(BF$_4$), Li(PF$_6$), Li(AsF$_6$), Li(CH$_3$CO$_2$), Li(CF$_3$SO$_3$), Li(CF$_3$SO$_2$)$_2$N, Li(CF$_3$SO$_2$)$_3$, Li(CF$_3$CO$_2$), Li(B(C$_6$H$_5$)$_4$), Li(SCN), Li(NO$_3$). Les nanoparticules de polymère pouvant être des polyimides, du PVDF, PEO (oxyde de polyéthylène), des polyméthacrylates, des polysiloxanes.

Dans certains modes de réalisation, le potentiel zêta des suspensions de particules de matériaux d'électrode est supérieur à 40 mV, et de préférence supérieur à 60 mV. De telles suspensions sont très stables et comprennent peu d'agglomérats de particules, permettant de ce fait des dépôts comportant peu de défauts.

Dans certains modes de réalisation, les suspensions de particules de matériaux d'électrode contiennent en outre un stabilisant stérique ou, de préférence, électrostatique. Ce stabilisant permet d'améliorer encore la stabilité de la suspension, et par conséquent la qualité du film déposé.

Cependant, on préfère que les suspensions de matériau d'électrode ne contiennent pas de stabilisant. Les suspensions sans stabilisants stables ont avantageusement des extraits secs compris entre 2 et 20 g/L, la taille des particules étant de préférence inférieure à 100 nm, et encore plus préférentiellement inférieure à 50 nm. Dans ce cas, le potentiel Zêta de la suspension est généralement inférieur à 40 mV, et plus particulièrement compris entre 25 et 40 mV.

Un autre objet de l'invention est l'utilisation du procédé dans la fabrication de batteries, en particulier de batteries de type à ions de lithium, entièrement solides.

Encore un autre objet est une couche d'électrode dans une batterie entièrement solide, susceptible d'être obtenue par le procédé décrit ci-dessus, caractérisée en ce qu'elle comprend au moins une phase constituée de matériaux actifs anodique ou cathodiques, et au moins une phase conducteur des ions lithium et / ou conducteur électronique, lesdites phases étant cristallisées avec une taille de grain comprise entre 1 et 100 nm.

**Description des figures**

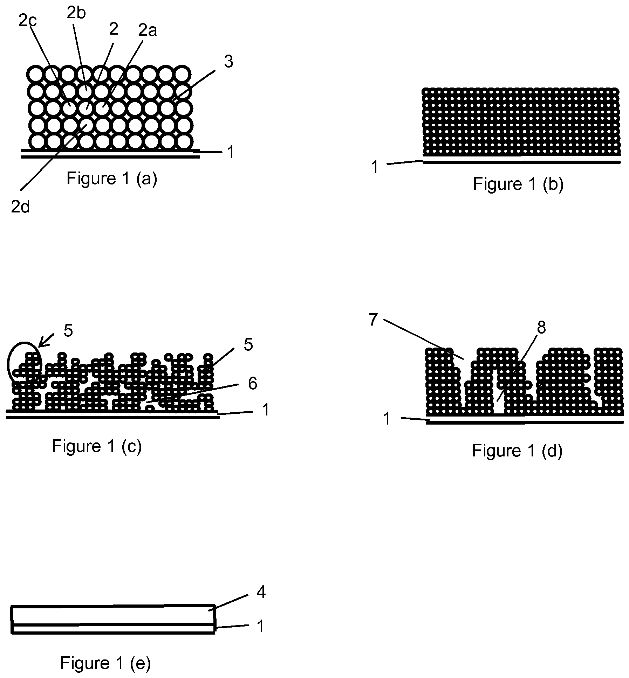

Les figures 1(a), (b), (c) et (d) montrent de manière schématique des couches formées par empilement de particules de forme approximativement isotrope. La figure 1(e) montre un film déposé par PVD sur un substrat.

La figure 1(a) montre de manière schématique un dépôt compact de particules **2** sur un substrat **1**. Toutes les particules **2** sont en contact avec leurs premiers voisins **2a**, **2b**, **2c**, **2d**. Les porosités **3** se situent entre les particules **2**. Sur cette figure (ainsi que sur les figures 1(b), 1(c) et 1(d)), on a volontairement représenté un empilement moins dense que l'empilement hexagonal compact, afin de rendre mieux visible les porosités 3 entre les particules **2**.

La figure 1(b) montre de manière schématique un dépôt compact de particules **2** tel qu'il peut être obtenu en utilisant le procédé selon l'invention.

La figure 1(c) montre un dépôt de particules **2** sur un substrat, le dépôt présentant des défauts. Ces défauts sont essentiellement des cavités **6** liées à la présence d'agglomérats **5** ; ces cavités **6** représentent donc une porosité inter-agglomérat, contrairement à la porosité intra-agglomérat **3** qui se situe à une échelle géométrique beaucoup plus fine. Dans le cas d'un dépôt par le procédé selon l'invention, ces agglomérats **5** se forment lorsque la suspension utilisée n'est pas suffisamment stable.

La figure 1(d) montre un dépôt de particules avec des fissures apparues après séchage ; ces fissures peuvent être des fissures ouvertes (débouchantes) **7** ou des fissures internes (non débouchantes) **8**.

La figure 1(e) illustre un dépôt dense **4** tel qu'il peut être obtenu par des techniques de type PVD ; la porosité de ces dépôts denses est proche de 0% car ils ne sont pas formées par empilement de particules.

Les figures 2 à 6 illustrent des modes de réalisation de l'invention.

Les figures 2a, 2a', 2b, 2b', montrent les produits obtenus à différents étapes d'un mode de réalisation particulier du procédé selon l'invention.

Les figures 3a, 3a', 3b, 3b', montrent les produits obtenus à différents étapes d'un mode de réalisation particulier du procédé selon l'invention.

Les figures 4a, 4b, 4c, 4d montrent les produits obtenus à différents étapes d'un autre mode de réalisation particulier du procédé selon l'invention, dans lequel le substrat sur lequel on dépose les électrodes est une bande de polymère métallisé.

Les figures 5a, 5b, 5c, 5d, 5e, 5f montrent les produits obtenus à différents étapes d'un autre mode de réalisation particulier du procédé selon l'invention, dans lequel le substrat sur lequel on dépose les électrodes est constitué d'une feuille métallique recouverte sur ses deux faces de polymère photosensible, pouvant servir à réaliser une épargne.

Les figures 6a, 6b, 6c, 6d montrent les produits obtenus à différentes étapes d'un autre mode de réalisation particulier du procédé selon l'invention, dans lequel le substrat sur lequel on dépose les électrodes est un substrat isolant comportant des zones métallisées.

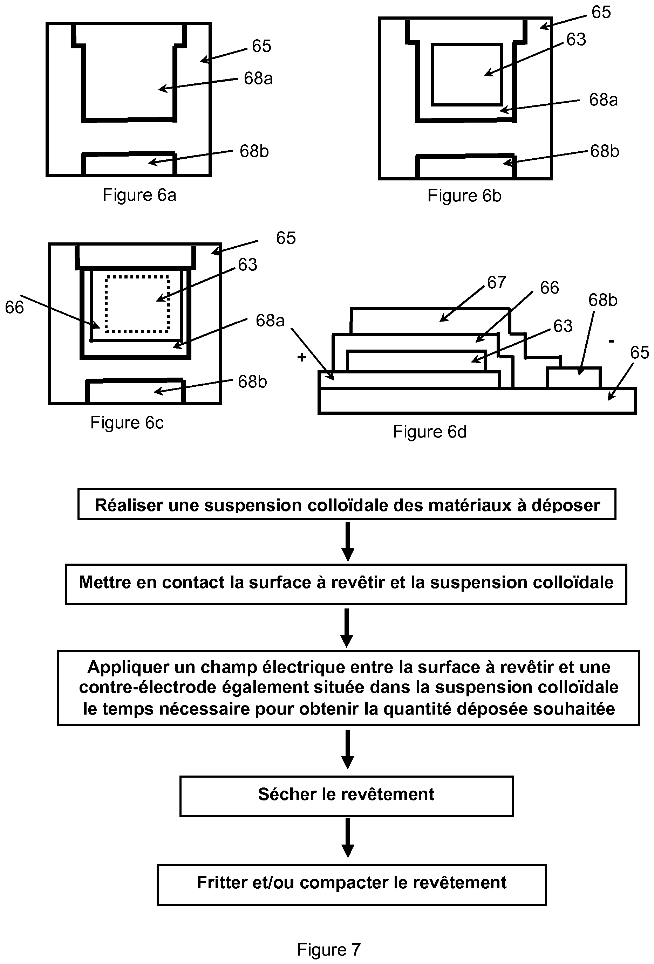

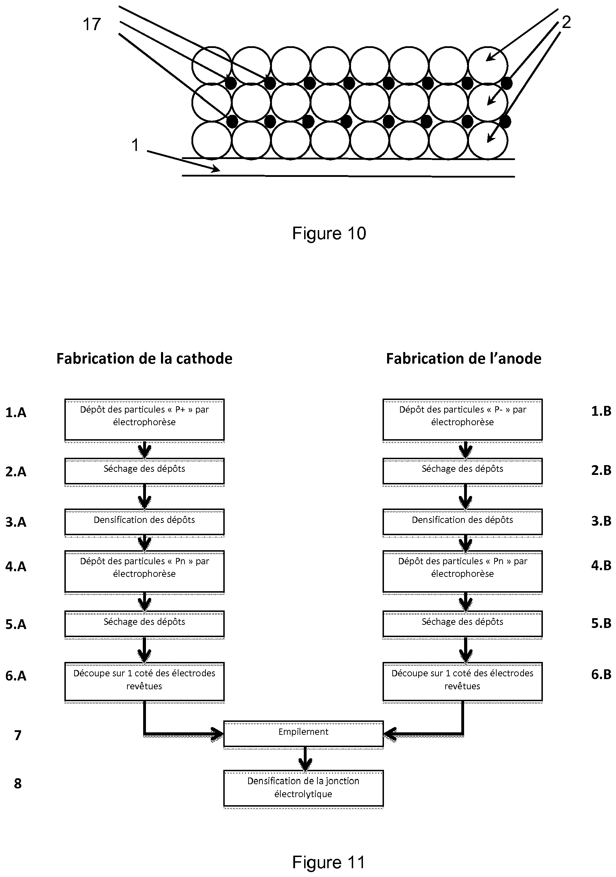

Les diagrammes de la figure 7 et de la figure 11 présentent des modes de réalisation typiques du procédé selon l'invention.

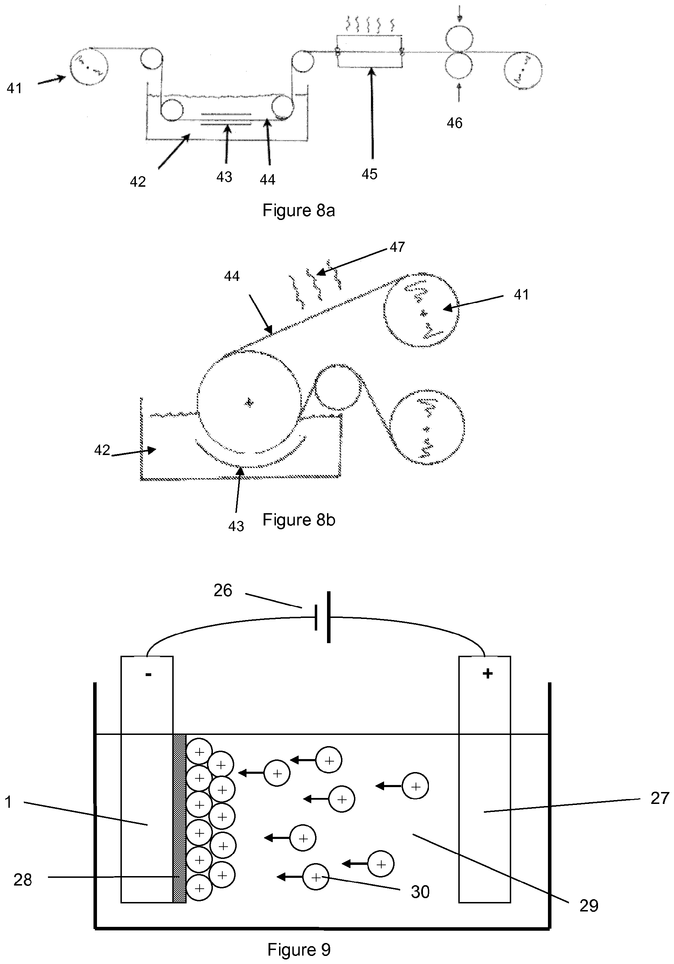

Les figures 8a et 8b représentent de manière schématique des dispositifs pour la mise en oeuvre du procédé selon l'invention.

La figure 9 illustre le principe de fonctionnement des dépôts par électrophorèse

La figure 10 est une représentation schématique d'un dépôt de nanoparticules de deux tailles différentes.

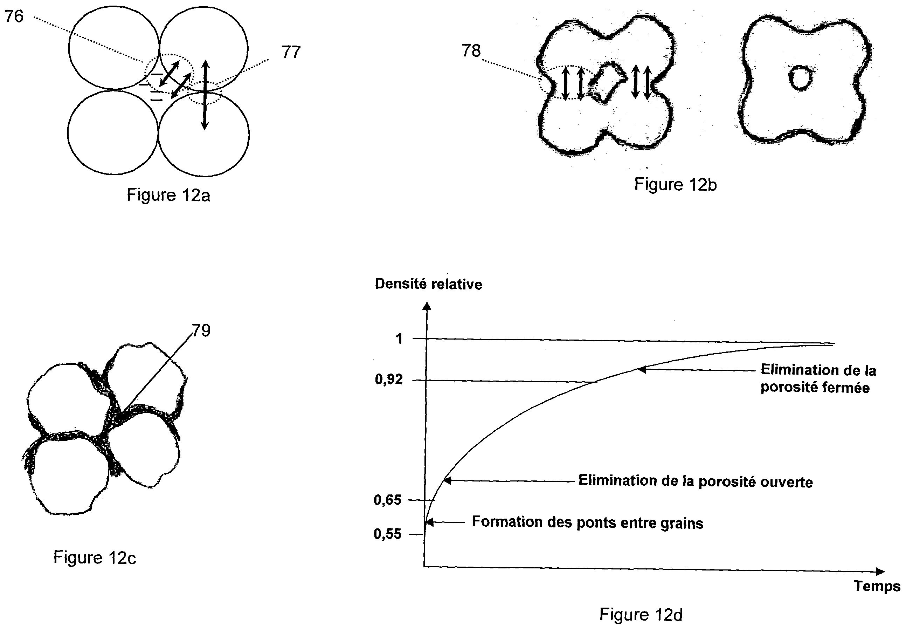

Les figures 12a, 12b, 12c représentent des chemins de diffusion du lithium dans différentes configurations d'assemblages de particules. La figure 12d représente l'évolution de la porosité en fonction de la densité du dépôt.

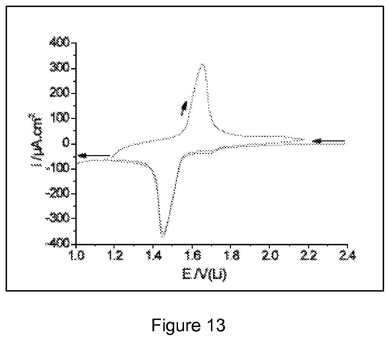

La figure 13 est une courbe de voltampérométrie pour une suspension de particules de $L_{14}T_{15}O_{12}$ avec un extrait sec de 10 g/L.

Liste de références

| 1 | Substrat |
|---|---|
| 2,2a,2b,2c,2d | Particules |
| 3 | Pore |
| 4 | Film obtenu par dépôt PVD |
| 5 | Agglomérat |
| 6 | Cavité |
| 7 | Fissure débouchante |
| 8 | Fissure non débouchante |
| 9 | Masque isolant |
| 17 | Particules de taille inférieure à celle des particules 2 |
| 24 | Cathode |
| 26 | Alimentation électrique |
| 27 | Contre-électrode |
| 28 | Dépôt |
| 29 | Suspension colloïdale |
| 30 | Particules |
| 41 | Dérouleur |
| 42 | Suspension colloïdale |
| 43 | Contre-électrode |
| 44 | Substrat (feuillard) |
| 45 | Four de séchage |
| 46 | Dispositif de compaction mécanique |
| 47 | Séchage du substrat revêtu du film déposé par électrophorèse |
| 50 | Tranche du substrat |
| 60 | Substrat (film polymère métallisé) (figures 4a, à 4d) |
| 61, 61a, 61b | Film polymère |
| 62 | Couche métallique du substrat 60 ou du « sandwich » 70 |

(suite)

| 63 | Couche de cathode |
|---|---|
| 64a, 64b | Epargne |
| 65 | Substrat isolant |
| 66 | Couche d'électrolyte |
| 67 | Couche d'anode |
| 68a, 68b | Films métalliques sur substrat isolant 65 |
| 70 | Film métallique recouvert de résine photosensible sur ses deux faces (figures 5a à 5f) |
| 76 | Zone de contact surfacique entre les particules et l'électrolyte contenu dans les porosités (chemin de diffusion peu résistif) |
| 77 | Zone de contact ponctuel entre les particules (la diffusion du lithium étant limitée sur ce contact ponctuel) |
| 78 | Soudure des particules durant la densification ayant donné lieu à l'apparition de chemins de diffusion dans le solide, pour le transport des charges électriques (électrons et ions) |
| 79 | Phase fusible ayant consolidé les particules entre elles |

**Description détaillée de l'invention**

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt compact de particules se forme sur le substrat, si le potentiel zêta présente une valeur appropriée comme il sera expliqué ci-dessous.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble de particules est donnée en $D_{50}$.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

On entend par « frittage » un processus faisant évoluer par traitement thermique un système constitué de particules individuelles (ou un aggloméré poreux), en l'absence de pression externe exercée ou sous l'effet d'une telle pression, de sorte qu'au moins certaines des propriétés du système (sinon toutes) soient modifiées dans le sens d'une réduction de l'énergie libre globale du système. Parallèlement, cette évolution entraîne une diminution importante (sinon complète) de la porosité initiale. Enfin, le processus suppose qu'au moins une phase solide existe constamment pendant tout le traitement thermique, de façon à conserver une certaine stabilité de forme et de dimension au système considéré.

Le procédé selon l'invention comprend l'étape essentielle de dépôt électrophorétique de particules de matériaux de cathode et/ou d'anode. Un tel procédé permet de réduire de manière significative la quantité de défauts dans les couches obtenues par rapport aux procédés connus, notamment les grandes porosités, cavités, craquelures et agglomérats ; la qualité des couches déposées est meilleure lorsque la suspension à partir de laquelle le dépôt est effectué est suffisamment stable.

Le procédé selon l'invention permet le dépôt de couches d'électrodes. Ces couches ont une épaisseur généralement inférieure à environ 20 µm, de préférence inférieure à environ 10 µm, et encore plus préférentiellement inférieure à 5 µm.

Le procédé de fabrication de batteries en couches minces entièrement solides selon la présente invention présente une alternative avantageuse aux techniques connues, et particulièrement aux techniques de dépôt PVD, en permettant de faire des dépôts très denses, à basse température, sur de grandes surfaces de substrat, avec des vitesses de dépôt élevées, des épaisseurs contrôlables facilement et de manière très précise (en fonction de la taille des particules), sur un large intervalle d'épaisseur pouvant aller du dixième de micron à plusieurs dizaines voire centaines de microns, sans induire d'investissements très couteux dans des machines complexes et peu productives.

Les figures 1a à 1c illustrent les différences entre les porosités **3** intra agglomérats, situées entre les particules **2**, et que nous appellerons dans ce document « porosités », et les porosités **6** inter agglomérats, situées entre les agglomérats **5** et que nous appellerons « cavités » **6**.

Un dépôt compact est un dépôt qui ne comporte pas de cavités, ni de fissures. En revanche, il comporte des porosités dont le taux s'exprime en pourcentage et se calcule de la manière suivante :

$$\text{Porosité [\%]} = [(\text{densité du matériau massif} - \text{densité vraie})/\text{densité vraie}] \times 100$$

sachant que la « densité vraie » est la densité mesurée sur la couche déposée et que la densité du matériau massif est la densité massive du matériau déposé, en faisant abstraction de la présence de particules dont l'empilement forme une porosité

Nous décrivons ici en détail chacune des étapes du procédé selon l'invention.

*Préparation des suspensions*

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales *SP+ ou SP-* très stables. La stabilité des suspensions dépend de la taille des particules *P+, P-,* ainsi que de la nature du solvant utilisé et du stabilisant ayant servi à stabiliser la suspension colloïdale.

On entend par « *SP+* » une suspension colloïdale contenant des particules « *P+* » de matériaux permettant d'obtenir un film de cathode, par « *SP-* » une suspension colloïdale contenant des particules *P-* de matériaux permettant d'obtenir un film d'anode.

Afin de faciliter la densification ultérieure éventuelle du dépôt et de garantir la possibilité de faire des dépôts en couches minces avec des épaisseurs et des profils (rugosité) très précis, des suspensions colloïdales contenant des particules de taille nanométriques sont préférées. Ces particules ont de préférence une taille de particules moyenne $D_{50}$ inférieure à 100 nm, et plus préférentiellement (surtout dans le cas où la suspension comporte des particules de matériaux à point de fusion élevés) inférieure à 30 nm. En effet, avec des particules de faibles dimensions, la densification du dépôt est grandement facilitée dès lors que le dépôt est compact.

La réalisation de dépôts électrophorétiques à partir de suspensions colloïdales stables permet d'éviter la formation de pores, de cavités et d'amas préjudiciables à la densification du dépôt. De plus, avec cette technique, il est possible d'obtenir des dépôts ayant une excellente compacité, sans nécessairement avoir obligatoirement recours à des pressages mécaniques, et quelle que soit la taille des particules déposées.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité du film mince, les dépôts sont dans certains modes de réalisation, réalisés à partir de suspensions colloïdales ayant un potentiel zêta supérieur à 40 mV, et encore plus préférentiellement 60 mV (en valeur absolue). Cependant dans d'autres modes de réalisation préférés dans le cadre de la présente invention, les suspensions ont de faibles extraits secs en particules et le potentiel Zêta est inférieur à 40 mV, ainsi que cela est décrit plus en détail ci-après.

Les suspensions colloïdales destinées à être utilisées en électrophorèse comportent un solvant isolant électrique, qui peut être un solvant organique, ou de l'eau déminéralisée, ou un mélange de solvants, et des particules à déposer ; les suspensions colloïdales peuvent également comporter un ou plusieurs stabilisants.

Dans une suspension stable, les particules ne s'agglomèrent pas entre elles pour créer des amas susceptibles d'induire des cavités, agglomérats et/ou défauts importants dans le dépôt. Les particules restent isolées dans la suspension.

Aussi, dans un mode de réalisation de la présente invention, la stabilité de la suspension nécessaire à l'obtention d'un dépôt compact est obtenue grâce à l'ajout de stabilisants.

Le stabilisant permet d'éviter la floculation des poudres et la formation d'agglomérats. Il peut agir par un effet électrostatique ou par un effet stérique. La stabilisation électrostatique est basée sur les interactions électrostatiques entre des charges et est obtenue par la distribution d'espèces chargées (ions) dans la solution. La stabilisation électrostatique est contrôlée par la charge de surface des particules ; elle peut par conséquent dépendre du pH. La stabilisation stérique met en oeuvre des polymères, tensio-actifs non ioniques voire des protéines, qui, ajoutés à la suspension, viennent s'absorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique qui est facile à mettre en oeuvre, réversible, peu onéreuse, et qui facilite les processus ultérieurs de consolidation.

Cependant les inventeurs ont constaté qu'avec les nanoparticules des matériaux d'électrode utilisés dans le cadre de la présente invention, il est possible d'obtenir des suspensions colloïdales stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans un solvant organique de type alcool et/ou cétone. Ces suspensions colloïdales stables de particules sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

L'ajout de stabilisants ou de cations dans de telles suspensions pour modifier la charge de surface des nanoparticules afin de les rendre compatibles de polarisations cataphorétiques conduirait à polluer les dépôts, pire, des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V doivent être privilégiées. En effet, au-delà de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Selon l'invention, les nanoparticules utilisées pour la réalisation du film mince de <u>cathode</u> peuvent être choisies de manière préférée mais non exhaustive parmi un ou plusieurs des matériaux suivants : $LiMn_2O_4$, $LiCoO_2$, $LiNiO_2$, $LiMn_{1,5}Ni_{0,5}O4$, $LiMn_{1,5}Ni_{0,5-x}X_xO_4$ (X = Al, Fe, Cr, Co, Rh, Nd, autres terres rares,, et 0 < x < 0,1), $LiFePO_4$, $LiMnPO_4$, $LiNiPO_4$, $Li_3V_2(PO_4)_3$, $LiCoPO_4$, $LiFeO_2$, $LiMn_{1/3}Ni_{1/3}Co_{1/3}O_4$ ainsi que toutes les formes lithiées des chalcogénides suivants : $V_2O_5$, $V_3O_8$, $TiS_2$, $TiO_yS_z$, $WO_yS_z$, $CuS$, $CuS_2$.

Selon l'invention, les nanoparticules utilisées pour la réalisation du film mince d'anode peuvent être choisies de manière préférée mais non exhaustive parmi un ou plusieurs des matériaux suivants :

- les oxynitrures d'étain (de formule typique $SnO_xN_y$) ;
- les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.
- les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;
- les oxydes $SnO_2$, $Li_4Ti_5O_{12}$, $SnB_{0,6}P_{0,4}O_{2,9}$.

D'autre part, on peut ajouter aux matériaux cités précédemment, des nanoparticules de matériaux conducteurs électroniques, et en particulier de graphite, et/ou des matériaux conducteurs des ions lithium, et en particulier des matériaux plus fusibles que les matériaux d'électrode. En effet, certains matériaux d'électrode sont de mauvais conducteurs ioniques et électriques, par conséquent lorsque les épaisseurs déposées sont supérieures à 0,5 $\mu$m l'électrode peut être trop résistive, et elle ne fonctionne plus. Or des épaisseurs de 1 à 10 $\mu$m sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques).

On peut ajouter par exemple les composés suivants :

- les composés lithiés à base d'oxynitrure de lithium et de phosphore (appelés LiPON) sous forme $Li_xPO_yN_z$ avec x -2,8 et 2y+3z -7,8 et $0,16 \leq z \leq 0,4$, et en particulier le $Li_{2,9}PO_{3,3}N_{0,46}$, mais également toutes les variantes sous forme $Li_wPO_xN_yS_z$ avec 2x+3y+2z = 5=w et $3,2 \leq x \leq 3,8$, $0,13 \leq y \leq 0,4$, $0 \leq z \leq 0,2$, $2,9 \leq w \leq 3,3$ ou sous forme $Li_tP_xAl_yO_uN_vS_w$ avec 5x+3y=5, 2u+3v+2w=5+t, $2,9 \leq t \leq 3,3$, $0,94 \leq x \leq 0,84$, $0,094 \leq y \leq 0,26$, $3,2 \leq u \leq 3,8$, $0,133 \leq v \leq 0,46$, $0 \leq w \leq 0,2$ ;
- les composés lithiés à base d'oxynitrure de lithium, de phosphore et de silicium (appelés LiSiPON), et en particulier le $Li_{1,9}Si_{0,28}P_{1,0}O_{1,1}N_{1,0}$ ;
- les oxynitrures de lithium de types LiBON, LiBSO, LiSiPON, LISON, thio-LiSiCON, LiPONB (ou B, P et S représentent respectivement le bore, le phosphore et le soufre);
- les composés $La_{0,51}Li_{0,34}Ti_{2,94}$, $Li_{3,4}V_{0,4}Ge_{0,6}O_4$, $Li_2O\text{-}Nb_2O_5$, $LiAlGaSPO_4$ ;
- les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1-x}Al_xM_{2-x}(PO_4)_3$ (où M = Ge, Ti, et/ou Hf, et où 0 < x < 1), $Li_{1,x,y}Al_xTi_{2-x}Si_yP_{3-y}O_{12}$ (où $0 \leq x \leq 1$ et $0 \leq y \leq 1$), $Li_{1+x+z}M_x(Ge_{1-y}Ti_y)_{2-x}Si_zP_{3-z}O_{12}$ (où $0 \leq x \leq 0,8$ $0 \leq y \leq 1,0$ ; $0 \leq z \leq 0,6$), et en particulier les formulations 4,9LiI-34,1$Li_2O$-61$B_2O_3$, 0,30$Li_2S$-0,26$B_2S_3$-0,44LiI, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)-$AlPO_4$, 0,7$Li_2S$-0,3$P_2S_5$.

L'ajout de telles nanoparticules de matériaux inorganiques (céramiques et/ou vitrocéramiques) conductrices des ions lithium permet de conserver le caractère totalement solide et inorganique de l'électrode. L'absence de sels de lithium et/ou liquides ioniques imprégnés permet d'éviter les problèmes de corrosion sur les collecteurs de courant, qui peuvent alors être tous deux composés d'aluminium, de limiter la sensibilité à la température et à l'humidité des batteries comportant de telles électrodes, d'améliorer la durée de vie et la sécurité d'utilisation de ces batteries.

Dans d'autres modes de réalisation, il est également possible d'utiliser des matériaux, essentiellement des polymères, contenant des sels de lithium pour assurer la conduction des ions lithium dans les électrodes. Les sels de lithium peuvent être LiCl, LiBr, LiI, $Li(ClO_4)$, $Li(BF_4)$, $Li(PF_6)$, $Li(AsF_6)$, $Li(CH_3CO_2)$, $Li(CF_3SO_3)$, $Li(CF_3SO_2)_2N$, $Li(CF_3SO_2)_3$, $Li(CF_3CO_2)$, $Li(B(C_6H_5)_4)$, $Li(SCN)$, $Li(NO_3)$. Les polymères peuvent être des polyimides, du PVDF, PEO (oxyde de polyéthylène), des polyméthacrylates, des polysiloxanes.

Une fois la composition chimique cible souhaitée définie, i.e. nature de la poudre ou des mélanges de poudres, les nanoparticules sont mises en suspension dans une phase liquide appropriée. Dans certains modes de réalisation, on ajoute un stabilisant afin d'obtenir une suspension dont le potentiel zêta est de préférence supérieur à 40 mV, et plus préférentiellement supérieur à 60 mV.

Cependant, de manière avantageuse, on utilise des suspensions ne contenant pas de stabilisants, et en particulier des suspensions ayant de faibles extraits secs (généralement inférieur à 20g/L), et en particulier des suspensions contenant des particules de taille inférieure à 100 nm, et de préférence inférieure à 50 nm. Dans ce cas le potentiel Zêta de la suspension est généralement compris entre 25 et 40 mV.

A titre d'exemple les solvants utilisés peuvent être à base de cétone, d'alcool ou d'un mélange des deux.

Parmi les stabilisants stériques susceptibles d'être utilisés, on peut citer notamment le polyéthylène imine (PEI), l'acide polyacrylique (PAA), l'acide citrique, la nitrocellulose sous réserve qu'ils soient solubles dans le solvant organique choisi.

Des stabilisations électrostatiques peuvent être réalisées par ajout d'iodure, par ajouts d'acides ou bases. L'acidification ou basification de la solution peut être réalisée par ajout de traces d'eau et d'acides lorsque la suspension est réalisée en phase solvantée.

La conductivité électrique de la suspension peut être contrôlée pour obtenir un gradient de potentiel important entre les deux électrodes, sans risque de claquage diélectrique. De préférence la conductivité de la suspension colloïdale est comprise entre 1 et 20 μS/cm. Des acides et bases fortes peuvent être ajoutés en faible quantité pour contrôler la conductivité de la suspension et charger les surfaces des particules.

Pour obtenir une suspension stable, avec des particules de tailles nanométriques sans agglomérats, il peut être nécessaire de réaliser une étape de broyage et/ou de dispersion des poudres, préalablement à la mise en suspension des nanoparticules, afin de désagglomérer les particules et éventuellement d'ajuster leur taille (pour obtenir une taille moyenne inférieure à 100 nm ou même inférieure à 30 nm) et de réduire la dispersion de taille. Des ultrasons peuvent également être mis en oeuvre pour aider à la désagglomération et à la mise en suspension des particules.

Les défauts créés dans les particules pendant les étapes de broyage dispersion, sont également susceptibles de diminuer la température de densification, au même titre que la réalisation de compressions mécaniques.

_Dépôt des couches_

Selon l'invention, la couche d'électrode est déposée par voie électrophorétique. Le dépôt électrophorétique de particules se fait par l'application d'un champ électrique entre le substrat sur lequel est réalisé le dépôt et une contre-électrode, permettant de mettre les particules chargées de la suspension colloïdale en mouvement, et de les déposer sur le substrat. L'absence de liants et d'autres solvants déposés en surface avec les particules permet d'obtenir des dépôts très compacts. La compacité obtenue grâce au dépôt électrophorétique, et l'absence de composés organiques en grande quantité dans le dépôt permet de limiter voire d'éviter les risques de craquelures ou d'apparition d'autres défauts dans le dépôt pendant les étapes de séchage.

D'autre part, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs. Or, l'accroissement des contraintes économiques et environnementales impose de réduire les rejets dans l'atmosphère, ainsi la présente invention répond bien à ces contraintes.

De plus, ces étapes de déliantage conduisent à l'apparition de nombreux défauts dans le dépôt d'électrode.

De plus la vitesse de dépôt peut être très élevée en fonction du champ électrique appliqué et de la mobilité électrophorétique des particules de la suspension. Pour une tension appliquée de 200 V, des vitesses de dépôt de l'ordre de 10 $\mu$m/min peuvent être obtenues.

La figure 9 illustre le principe de fonctionnement des dépôts par électrophorèse.

L'inventeur a constaté que cette technique permet de réaliser des dépôts sur de très larges surfaces avec une excellente homogénéité (sous réserve que les concentrations en particules et champs électriques soient homogènes sur la surface du substrat). Elle se prête aussi bien à un procédé continu en bande, c'est-à-dire le substrat est avantageusement une bande ; pendant le dépôt par électrophorèse, la bande est avantageusement stationnaire par rapport à la phase liquide.

Le substrat peut être une feuille ou une bande présentant une surface conductrice. A titre d'exemple, un feuillard de cuivre ou aluminium, d'une épaisseur qui peut être par exemple de 6 $\mu$m, peut être utilisé, ou une bande polymère présentant un dépôt de surface électriquement conducteur.

Avantageusement le substrat est une feuille mince d'aluminium. En effet, les substrats en aluminium sont compatibles des procédés de dépôt anaphorétiques, contrairement à certains autres métaux et en particulier le cuivre qui a tendance à se dissoudre en polarisation anodique. Cette dissolution en surface des bandes de cuivre ne permet pas de créer une base d'accroche stable pour les dépôts d'électrode. Or les inventeurs ont remarqué qu'avec les nanoparticules des matériaux de batterie, il était possible d'obtenir des suspensions colloïdales de particules, sans ajouts de stabilisants, mais que ces nanoparticules étaient toujours chargées négativement et par conséquent compatibles des dépôts en anaphorèse.

L'épaisseur de chacune des couches de cathode et d'anode est de préférence comprise entre 5 $\mu$m et 20 $\mu$m.

Après le dépôt de la couche et son séchage, et avant l'éventuelle étape de frittage par traitement thermique, on peut effectuer une étape de compaction mécanique (par exemple par pressage) afin de compacter davantage les particules et induire des déformations des particules qui faciliteront encore plus la densification ultérieure.

Le dépôt par électrophorèse peut être mis en oeuvre dans un procédé de type « batch » (statique) ou dans un procédé continu. Les figures 8a et 8b illustrent différents modes de réalisation de dépôts par électrophorèse, pour réaliser aussi bien des bandes minces ou bien des revêtements sur substrat conducteur.

Lors du dépôt électrophorétique, une alimentation stabilisée permet d'appliquer une tension entre le substrat conducteur et deux électrodes situées de part et autre de ce substrat. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

La figure 8a montre de manière schématique une installation pour mettre en oeuvre le procédé selon l'invention. L'alimentation électrique située entre les contre-électrodes **43** et le substrat conducteur **44** n'est pas représentée. On applique un champ électrique entre les deux contre-électrodes **43** et le substrat **44** pour déposer des particules de la suspension colloïdale **42** sur les deux faces du substrat **44**.

Le bobineau de feuillard (bande) conducteur électrique 44 servant de substrat est déroulé à partir d'un dérouleur **41**. Après le dépôt la couche déposée est séchée dans un four de séchage **45** puis consolidé par compaction mécanique à l'aide d'un moyen de compaction **46** approprié. La compaction peut être réalisée sous atmosphère contrôlée et pour des températures comprises entre la température ambiante et la température de fusion des matériaux déposés.

La représentation de la figure 8a est intéressante pour la fabrication de dépôts de matériaux actifs sur des collecteurs de courant servant à réaliser des électrodes de batterie. Cependant, on peut se limiter à revêtir qu'une seule face du substrat. Aussi, la figure 8b représente un dispositif pour réaliser un revêtement sur une seule face conductrice, sans compaction mécanique.

Par ailleurs cette technique de dépôt permet un recouvrement parfait de la surface quelle que soit sa géométrie, la présence de défauts d'aspérité.

L'absence de contacts mécaniques permet de réaliser ces dépôts sur des surfaces extrêmement larges. En effet, avec des techniques de dépôts connues comme le roll coat, doctor blade etc. il est difficile de garantir une parfaite homogénéité d'épaisseur sur des substrats larges, ce qui fait que lignes de revêtement sont souvent limitées en largeur.

A titre d'exemple, lorsque l'on souhaite réaliser des dépôts de batteries Li-ion de puissance, autrement dit des dépôts de fines épaisseurs, la largeur maximale de bande se situe aux alentours de 200 à 300 mm, ce qui limite fortement la capacité de production des lignes de revêtement selon l'état de la technique.

Lorsque des matériaux peu ou pas conducteurs électriques sont déposés par électrophorèse sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement d'excellente qualité, avec peu de défauts et très homogènes.

Le diagramme de la figure 7 présente un mode de réalisation typique du procédé selon l'invention :

1° étape : Préparation des suspensions. Dans une première étape on prépare une suspension colloïdale à partir des poudres de la composition chimique du revêtement (de la couche mince) souhaitée.

2° étape : Mise en contact de la surface à revêtir et de la suspension colloïdale, typiquement par immersion du substrat métallique dans la suspension colloïdale. La suspension colloïdale peut recouvrir la totalité de la surface du substrat. Dans un mode de réalisation particulier, un masque peut être appliqué sur la surface du substrat de manière à limiter la surface en contact de la suspension et par voie de conséquence réduire la surface de dépôt.

3° étape : Application d'un champ électrique entre la surface à revêtir et une contre électrode également située dans la suspension colloïdale le temps nécessaire pour obtenir la quantité déposée souhaitée. Ce champ électrique peut être constant et / ou variable (alternatif). Le sens moyen du champ électrique, c'est-à-dire du potentiel appliqué aux électrodes est adapté à la charge de la particule à déposer.

4° étape : Séchage du revêtement. Les conditions de séchage dépendent de l'épaisseur déposée ainsi que de la nature du solvant.

5° étape : Densification du dépôt par frittage et/ou compaction mécanique.

*Densification du dépôt*

Avantageusement, les couches déposées sont densifiées, afin de minimiser les cavités, pores, fissures et autres défauts de compacité. Cette étape de densification du dépôt peut être réalisée :

- par un traitement thermique. La température dépend fortement de la composition chimique des poudres déposées. Selon la composition chimique des particules déposées, il peut être nécessaire par ailleurs de maintenir une atmosphère contrôlée afin d'éviter l'oxydation du revêtement ;

- par une combinaison de moyens thermiques et mécaniques, en particulier par frittage sous pression ;

D'une manière générale, pour la température de densification, on préfère ne pas dépasser 600°C, encore plus préférentiellement on ne dépasse pas 500°C. Dans certains modes de réalisation, la température est comprise entre 180°C et 400°C.

La densification à de telles températures nécessite que le film obtenu à l'issue du dépôt soit compact, c'est-à-dire sans méso porosités (fissures, cavités), agrégats. Ceci est permis par le procédé de dépôt par électrophorèse tel que décrit plus haut. De plus il est nécessaire que les particules déposées soient de tailles nanométriques tel que décrit plus haut, et préférentiellement de taille inférieure à 50 nm, plus préférentiellement inférieure à 30 nm.

D'autre part, la température de traitement thermique dépend également de l'application ou non d'une pression, la pression pouvant être appliquée avant, après ou pendant le traitement thermique. Lorsqu'une pression est appliquée, la température de traitement thermique peut être abaissée.

Dans tous les cas, la pression appliquée est avantageusement comprise entre 20 et 100 MPa.

Elle peut toutefois être supérieure si besoin. Dans certains modes de réalisation, la pression appliquée est supérieure à 250 MPa, voire supérieure à 400 MPa.

Le substrat des couches d'électrodes est de préférence composé d'un matériau conducteur électrique généralement métallique. Lorsque le substrat est métallique, on préfère éviter de le chauffer à des températures élevées lors de la fabrication de la batterie, afin d'éviter tout risque d'oxydation et de détérioration des propriétés de surfaces. La réduction de l'oxydation de surface est particulièrement bénéfique pour diminuer des résistances de contact électrique, point essentiel au fonctionnement de dispositifs de stockage et/ou production d'énergie.

L'obtention de couches électrophorétiques de très bonne qualité tel que décrit ci-dessus, et en particulier de couches compactes, permet de réduire la durée et la température des traitements thermiques et de limiter le retreint de ces traitements, et d'obtenir une structure nanocristalline homogène Ceci contribue à l'obtention de couches denses sans défauts.

L'inventeur a constaté que plus la taille des particules déposées diminue, plus la température du traitement thermique peut être diminuée. Il est ainsi possible de réaliser des dépôts en couches minces, ou relativement épaisses, avec des taux de porosité inférieure à 5% voire 2% sans avoir recours à des températures et/ou durées de traitement thermiques importants. Par ailleurs, cette technologie de compaction des dépôts à faible température réduit considérablement les risques de rétreint. Aussi, il n'est plus nécessaire d'avoir recours à des cycles de traitement thermique très complexes et couteux pour consolider les dépôts de céramiques des films d'électrodes des batteries.

Durant la ou les phase(s) de densification thermique et/ou compaction mécanique il peut être avantageux de travailler sous vide, ou sous atmosphère inerte afin d'éviter l'apparition de pollution sur les surfaces des particules qui pourraient nuire au mécanisme de densification des particules entre-elles.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il est nécessaire que les particules soient au préalable compactées mécaniquement, et/ou déposées avec un empilement compact. C'est la multiplication des contacts mécaniques entre ces particules permet de faciliter les processus diffusionnels à l'origine de la densification. Aussi, pour compacter les dépôts, des pressages sont généralement appliqués.

La présence d'agglomérats, de cavités inter-agglomérats influence également la densification. Plus leurs tailles augmentent, plus la distance de diffusion augmente et plus la température de densification est élevée pour obtenir une bonne densification.

Ainsi, avec des nanoparticules déposées par électrophorèse on peut s'approcher de la densité théorique géométrique d'un empilement compact (74%) sans étape de compaction mécanique.

Un tel résultat n'est pas possible par les techniques d'encrage. Le dépôt de nanoparticules par la technique des encres mentionnée ci-dessus est très difficile en couche mince car la diminution de la taille des particules conduit à l'augmentation de la viscosité des suspensions. Il faut alors diminuer l'extrait sec en augmentant la proportion de solvant ; on observe alors que l'élimination d'une grande quantité de solvant des couches crues induit des pores et cavités, qu'il sera quasiment impossible de colmater sans avoir recours à des températures et/ou pressions extrêmes.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification du dépôt peut ainsi être réalisée à des températures inférieures à 0,7 $T_f$, préférentiellement 0,5$T_f$, voire 0,3$T_f$ où $T_f$ est la température de fusion (exprimée en °C) du matériau massif de composition chimique identique à celle de la particule déposée. Lorsque la couche d'électrode est composée d'un mélange de matériaux, la température de traitement thermique est choisie par rapport à la température de fusion du matériau le plus fusible, c'est-à-dire ayant la température de fusion la plus basse. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, d'obtention de couches minces sans porosités.

Un tel procédé de fabrication de couches d'électrode peut être utilisé directement sur des substrats comme des feuillards en aluminium, ayant de faibles températures de fusion.

Les nanoparticules étant très sensibles aux pollutions de surfaces, il est cependant préférable de réaliser ces traitements de consolidation sous vide, ou bien sous atmosphère inerte.

Le procédé selon l'invention peut être utilisé dans la fabrication d'une batterie Li-ion.

Pour illustrer un tel mode de réalisation, les étapes de fabrication sont décrites ci-dessous en référence à la figure 11.

Aux étapes 1.A et 1.B on dépose par électrophorèse un film de cathode et d'anode, respectivement, sur un substrat conducteur. Ce dépôt peut être effectué sur les deux faces du substrat conducteur. Aux étapes 2.A et 2.B on sèche le film déposé par électrophorèse. Aux étapes 3.A et 3.B on le densifie par un moyen mécanique et/ou thermique. Cette densification permet d'obtenir une densité supérieure à 90% de la densité théorique du corps massif, voire supérieure à 95%.

Avec les techniques électrophorétiques, il est possible d'obtenir des dépôts ayant une très bonne compacité de départ. Ainsi, un tel dépôt ne présente qu'un faible retreint lors de la densification par traitement thermique, et il y a peu ou pas de défauts dans les films, même lorsqu'ils sont réalisés sur de larges surfaces et de fortes épaisseurs. Par ailleurs, l'étape de densification par traitement thermique est réalisée d'autant plus facilement à faible température, pour des temps courts, que le film de départ est compact avec des particules de faibles dimensions. Pour accroitre davantage la compacité avant frittage, il est avantageux d'utiliser des particules de faibles dimensions (<30 nm) et/ou de formes parallélépipédiques.

Aux étapes 4.A et 4.B, on dépose sur l'anode et sur la cathode, respectivement, le film d'électrolyte, par tout moyen approprié. L'épaisseur du film déposé peut être de l'ordre de 1 μm. De préférence, ce dépôt recouvre également les bords (i.e. les tranches) des électrodes. Cette isolation des bords des électrodes évite à la fois le risque de court-circuit et le risque de courants de fuite. Aux étapes 5.A et 5.B on sèche ce dépôt d'électrolyte.

Aux étapes 6.A et 6.B, on découpe un bord des électrodes. De manière avantageuse, on découpe le bord lié à la bande, afin de laisser trois arêtes revêtues d'électrolyte sur la tranche. Cet électrolyte étant un diélectrique, il permettra lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité.

A l'étape 7 on réalise l'empilement de manière à ce que sur deux côtés opposés de l'empilement on trouve alternativement une succession de bords d'anode découpée et de bords de cathode revêtu d'électrolyte. A l'étape 8, cet empilement peut être densifié afin d'obtenir une bonne liaison (« soudure ») entre les deux faces de la couche d'électrolyte.

Si la température de fusion des couches d'anode et de cathode est significativement supérieure à celle de la couche d'électrolyte, il est préférable d'effectuer la densification thermique des couches d'anode et de cathode séparément, avant l'empilage, puis d'effectuer une densification thermique de l'empilement pour densifier la couche d'électrolyte.

Une fois l'empilement réalisé, des terminaisons (contacts électriques) sont ajoutés au niveau où les collecteurs de courant cathodiques, respectivement anodiques sont apparents (non revêtus d'électrolyte isolant). Ces zones de contact peuvent être sur les côtés opposés de l'empilement pour collecter de courant, mais également sur les mêmes cotés ou sur des cotés adjacents.

Dans un mode de réalisation particulier, l'empilement est réalisé par enroulement de deux demi-électrodes entre elles sur un mandrin afin d'obtenir une cellule forme cylindrique. les connexions anodiques sortent alors d'un côté, alors que les connexions cathodiques sortent de l'autre côte.

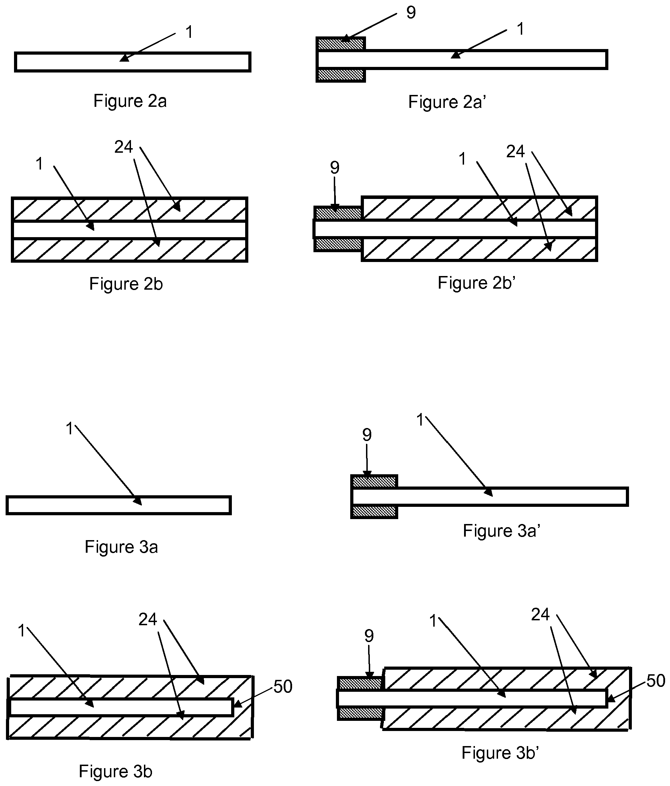

Les figures 2a à 2b' illustrent les différentes étapes d'un dépôt d'une couche d'électrode par électrophorèse selon l'invention.

La figure 2a représente l'approvisionnement d'un substrat, ici sous forme de feuillard métallique **1**.

La figure 2a' représente l'approvisionnement d'un substrat, ici sous forme de feuillard métallique **1**, dans cette étape une protection partielle de la surface du substrat 1 à l'aide d'un masque isolant **9** est réalisée. Ce masque peut être un film polymère strippable.

Les figures 2b et 2b' représentent le dépôt par électrophorèse des nanoparticules de cathode **24** sur les parties conductrices du substrat **1**. Sur la figure 2b le dépôt se fait sur toute la surface, et sur les deux faces, du substrat **1**, alors que sur la figure 2b' une partie du substrat est protégée par le masque isolant **9**.

Le produit obtenu par le procédé selon les figures 2a à 2b' correspond au cas où le substrat est approvisionné sous forme de bande.

Les figures 3a à 3b' représentent des produits identiques à ceux des figures 2a à 2b', hormis que la couche de cathode recouvre en plus une tranche du substrat.

Pour chacun des modes de réalisation des figures 2 à 3, le feuillard de substrat métallique peut être remplacé par un film de polymère métallisé, le film étant « strippable », c'est-à-dire qu'il peut être dissous dans une solution appropriée, ou pelable.

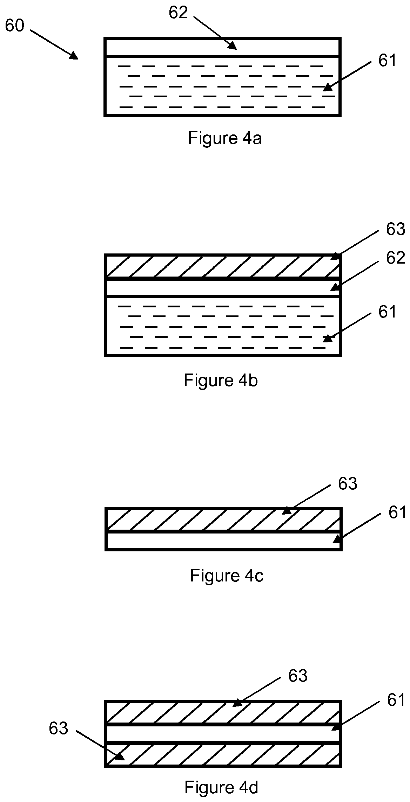

La figure 4a représente l'approvisionnement d'un substrat **60**, ici sous forme de film polymère « strippable » **61** revêtu d'une couche métallique **62**,

La figure 4b représente le dépôt par électrophorèse des nanoparticules de cathode **63** sur les parties conductrices du substrat **60**.

La figure 4c représente le strippage (ou pelage) du film polymère.

La figure 4d représente le dépôt des nanoparticules de cathode **63** sur la couche métallique **62** mise à nu dans l'étape de la figure 4c.

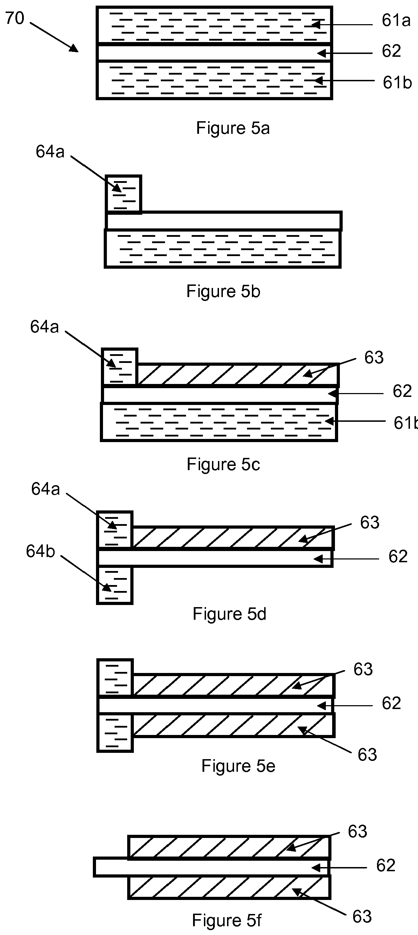

La figure 5a représente l'approvisionnement d'un substrat **70**, ici sous forme d'un film métallique **62** revêtu sur ses deux faces d'un film de résine polymère photosensible **61a**, **61b.**

La figure 5b représente l'épargne réalisé avec le polymère **61a** partiellement insolé et développé sur l'une des faces du film métallique **62**, avec réalisation d'une épargne **64a.**

La figure 5c représente le dépôt par électrophorèse des nanoparticules de cathode **63** sur les parties conductrices du substrat **60** (partie non recouverte de polymère ou résine photosensible).

La figure 5d représente l'épargne réalisée avec le polymère **61b** partiellement insolé et développé sur l'autre face du film métallique **62**, avec réalisation d'une épargne **64b**.

La figure 5e représente le dépôt par électrophorèse des nanoparticules de cathode 63 sur les parties conductrices du substrat **60** (partie du film métallique **62** non recouverte de polymère ou résine photosensible, ni de particules de cathode **63**).

La figure 5f représente le stripage des épargnes **64a, 64b.**

La figure 6a représente l'approvisionnement d'un substrat, ici sous forme d'une plaque isolante **65** revêtue partiellement de films métalliques **68a, 68b** correspondant à l'étape d) du mode de réalisation principal de l'invention.

La figure 6b représente le dépôt par électrophorèse des nanoparticules de cathode **63** sur la partie métallique du substrat **68a.**

La figure 6c représente le dépôt d'un film d'électrolyte **66** sur la partie métallique du substrat **68a** recouverte de cathode **63**.

La figure 6d représente une vue en coupe de la batterie après dépôt du film mince d'anode.

La figure 10 représente le dépôt compact de nanoparticules de tailles non-homogènes **2**, **17.** Un tel empilement pouvant être obtenu directement par co-dépôt d'un mélange de nanoparticules de tailles différentes ou par dépôt successifs de particules de tailles différentes.

La figure 12a représente le chemin de diffusion du lithium dans un empilement compact de particules imprégné d'électrolyte. Il existe une zone de contact surfacique **76** entre les particules et l'électrolyte contenu dans les porosités. Le chemin de diffusion peu résistif. Il existe également une zone de contact ponctuel **77** entre les particules. La diffusion du lithium sur ce contact ponctuel est limitée.

La figure 12b représente l'évolution de l'interface entre les particules pendant la consolidation. Le chemin de diffusion **78** peut être assuré en phase solide, sans recours à un électrolyte liquide dans les porosités

La figure 12c représente la structure obtenue après densification d'un dépôt composite contenant une phase «fusible» **79**.

La figure 12d montre de manière schématique l'influence de la densification sur le type de porosité. Ce point peut justifier que nos batteries aient des porosités inférieures à 30%. A ce niveau, elles sont fermées et ne peuvent plus être imprégnées d'électrolyte.

Plus la porosité est faible meilleures seront les performances (Wh/l, Wh/kg) si en la batterie est en couches minces.

L'électrophorèse permet de déposer des couches de compositions difficiles voire impossibles à obtenir par voie sous vide ; par exemple, on peut incorporer des polymères dans une phase minérale, ou déposer des composés de type spinelle ($LiMn_2O_4$) ou olivine ($LiMPO_4$ avec M=Fe, Co, Mn, Ni ...) difficilement accessibles par dépôt sous vide.

Les électrodes susceptibles d'être obtenues par le procédé selon l'invention se distinguent des électrodes connues par plusieurs particularités structurelles. L'électrode est de préférence entièrement solide, et peut présenter une composition qui ne peut pas être obtenue par dépôt sous vide. Le taux de porosité des couches d'anode et/ou de cathode, exprimé par le rapport différence entre densité théorique des couches et densité réelle / densité théorique des couches, est faible et peut être inférieure à 10% voire 5%, alors que les procédés connus conduisent à un taux de porosité qui reste en général supérieur à 20%. La taille des grains peut être beaucoup plus faible que dans les batteries à couches minces déposées par des encres, car la couche déposée par électrophorèse est plus dense, même avant densification.

Dans un mode de réalisation particulier, l'électrode est composée uniquement de matériaux inorganiques qui ne contiennent ni sels de lithium ni liquides ioniques imprégnés, ce qui permet d'éviter les problèmes de corrosion sur les collecteurs de courant, qui peuvent alors être tous deux composés d'aluminium, moins coûteux que le cuivre ou l'argent. Dans les batteries selon l'état de la technique, l'utilisation de l'aluminium n'est souvent pas possible ou limitée à la cathode, soit parce que leur fabrication implique des températures trop élevées par rapport au point de fusion de l'aluminium soit parce que un collecteur en aluminium risquerait d'être corrodé par les sels de lithium contenus dans les électrolytes et par les tensions extrêmes auxquels sont soumis les collecteurs dans les batteries. Le fait de n'employer au sein d'une même batterie qu'un seul matériau pour les collecteurs facilite leur recyclage.

L'invention présente de nombreux avantages. Le procédé de fabrication des couches d'anode et de cathode par électrophorèse est simple, rapide, peu onéreux.

De plus, dans des modes de réalisation avantageux de l'invention, la couche d'électrode ne contient pas de matériaux organiques ni de sels de lithium. Dans ce cas, le procédé selon l'invention n'a pas besoin d'être mis en oeuvre dans une atmosphère sèche, contrairement aux procédés selon l'état de la technique mettant en oeuvre des sels de lithium ou de lithium métallique, très sensibles à l'humidité. L'absence de sels de lithium corrosifs améliore la durée de vie de la batterie, diminue le risque de court-circuit interne et améliore également sa résistance à la température ; de ce fait, les batteries comportant une couche d'électrode déposée par le procédé selon l'invention peuvent subir une opération de soudage à la vague, contrairement aux batteries à ions de lithium en couches minces connues. Ainsi, les batteries selon l'invention présentent un meilleur niveau de sécurité.

## EXEMPLES

Le procédé selon l'invention peut être mis en oeuvre selon les exemples présentés ci-dessous.

Exemple 1- Film de cathode

*1- Préparation de la suspension colloïdale SP+*

Pour obtenir la suspension SP+ de particules P+ de matériau de cathode, on synthétise une poudre de $LiMn_2O_4$ constituée d'amas de nanoparticules. Pour cela on utilise la méthode de Pechini décrite dans l'article « Synthesis and Electrochemical Studies of Spinel Phase LiMn2O4 Cathode Materials Prepared by the Pechini Process », W. Liu, G.C. Farrington, F. Chaput, B. Dunn, J. Electrochem. Soc., vol.143, No.3, 1996.. Après l'étape de calcination à 600°C, la poudre contient des amas dont la taille est comprise entre 50 nm et 100 nm.

Cette poudre est ensuite mise en suspension de l'éthanol avec une concentration de 20 g/l.

La suspension SP+ est introduite dans le bol d'un broyeur à billes préalablement rempli de billes en céramiques de diamètre 0,1 mm. Le broyage pendant 2 heures en présence d'acide polyacrylique servant d'agent complexant, ce qui permet d'obtenir une solution colloïdale présentant des particules ($D_{50}$) dont la taille est égale à 30 nm. Le potentiel zêta de la suspension s'élève à environ 65 mV.

*2- Dépôt du film de cathode*

Les particules de $LiMn_2O_4$ contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 100 V jusqu'à obtenir un dépôt de 4 $\mu$m d'épaisseur. Ce dépôt est ensuite compacté sous une pression de 500 MPa, séché pendant 1 heure à 90°C avant d'être densifié par un traitement thermique de 500°C, réalisé pendant 1 heure. Le dépôt ainsi obtenu présente une porosité inférieure à 10%.

Exemple 2 - Suspension de particules de cathode et dépôt d'une cathode

Des poudres nanométriques de $LiMn_{1.5}Ni_{0.4}Cr_{0.1}O_4$ ont été synthétisées comme décrit dans l'exemple 5a ci-dessous. Ces nanopoudres ont été broyées et dispersées dans de l'alcool afin d'obtenir une suspension à 20 g/l de $LiMn_{1.5}Ni_{0.4}Cr_{0.1}O_4$. Le broyage dispersion a été conduit jusqu'à ce que la taille des particules en suspension atteigne 30 nm. Cette suspension a ensuite été diluée dans un solvant à base de cétone afin d'obtenir une suspension à 5 g/l. Les conditions de dépôt étaient de 70 V/cm, ce qui a permis d'obtenir un dépôt d'environ 1 $\mu$m d'épaisseur après seulement quelques secondes d'anaphorèse.

Exemple 3 - Film d'anode

*1- Préparation de la suspension colloïdale SP-*

Dans un premier temps une poudre de $Li_4Ti_5O_{12}$ constituée d'amas de particules de taille nanométrique est synthétisée selon le procédé décrit dans l'article « Phase-pure nanocrystalline Li4Ti5O12 for a lithium-ion battery » de M. Kalbac et al., J Solid State Elecrtochem (2003) 8 : 2-6. La synthèse s'effectue par mélange sous argon d'une solution de LiOEt à 0,9M et de butoxyde de titane(IV) dans l'éthanol. Le mélange est réalisé avec le rapport stoechiométrique du Li/Ti = 4:5. La solution obtenue est par la suite hydrolysée avec une solution aqueuse à 4% de polyéthylène glycol. Le mélange est ensuite mélangé pendant 11 heures avant d'être évaporé a 40°C jusqu'à obtenir une pâte visqueuse. Après calcination à 500°C, une poudre de $Li_4Ti_5O_{12}$ est obtenue.

Cette poudre est ensuite mise en suspension de l'éthanol avec une concentration égale à 20 g/l. La suspension est introduite dans le bol d'un broyeur à billes préalablement rempli de billes en céramiques de diamètre 0,1 mm. Le broyage pendant 3 heures en présence de quelques millilitres d'acide polyacrylique qui sert d'agent complexant, ce qui permet d'obtenir une solution colloïdale présentant des particules dont la taille ($D_{50}$) est égale à environ 8 nm. Le potentiel zêta de la suspension est égal à 60 mV.

*2- Dépôt du film d'anode*

Les particules de $Li_4Ti_5O_{12}$ contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 200 V jusqu'à obtenir un dépôt de 8 $\mu$m d'épaisseur. Ce dépôt est ensuite compacté sous une pression de 500 MPa, séché pendant 1 heure à 90°C avant d'être densifié par un traitement thermique à 450°C, réalisé pendant 2 heures. Le dépôt ainsi obtenu présente une porosité inférieure a 10%.

<u>Exemple 4 - Film d'anode</u>

*1- <u>Préparation de la suspension colloïdale SP-</u>*

Les nanoparticules de $L_{14}Ti_5O_{12}$ ont été achetées chez Aldrich, puis broyées dans de l'alcool éthylique avec une concentration de 10 g/l. Après cette étape de broyage-dispersion la suspension a été passée aux ultrasons puis elle a été laissée décantée. Nous avons prélevé uniquement le surnageant de la suspension après décantation afin d'être certain d'obtenir une suspension colloïdale monodisperse de nanoparticules, sans agglomérats de tailles supérieurs à 100 nm.

Une suspension a ainsi été obtenue, sans ajouts de stabilisant. En effet, nous avons pu remarqué que la stabilité des nano colloïdes dépendait grandement de la taille des particules et de leur concentrations dans la suspension. Lorsque la taille des particules avoisine la dizaine de nanomètres, elles peuvent être stables en suspensions sans ajout de stabilisants. La forte surface spécifique de ces particules et leur faible masse conduit à ce que le bilan des interactions conduit à ce que le système se comporte comme un gaz réel susceptible de se condenser en donnant naissance à un cristal colloïdal. Les dépôts électrophorétiques de ces nanoparticules nous permettent de condenser à la surface du substrat cette phase dite de cristal colloïdal.

*2- <u>Dépôt du film d'anode</u>*

Dans l'exemple suivant, l'électrode de $Li_4Ti_5O_{12}$ a été déposée en couche mince par électrophorèse des nanoparticules sur un feuillard d'aluminium électro poli.

Les conditions de dépôt utilisées étaient de 10V/cm, ce qui a permis d'obtenir un dépôt compact d'environ 0,5 $\mu$m d'épaisseur après seulement trente secondes d'anaphorèse.

Le dépôt a ensuite été recuit à 500°C pendant 1 heure puis pressé sous 50 MPa.

Une courbe de voltampérométrie cyclique a été tracée à 0,1 V/sec. sur cette électrode afin de valider ses propriétés d'insertion vis-à-vis des ions lithium. Une illustration de la courbe ainsi obtenue est donnée par la figure 13a:

<u>Exemple 5 - Synthèse de nanoparticules utilisables comme matériaux d'anode ou de cathode</u>

a) <u>$LiMn_{1,5}Ni_{0,4}Cr_{0,1}O_4$</u>

On dissout une poudre de $Li_2CO_3$ par petite quantité dans un mélange d'acide citrique et d'éthylène glycol chauffée à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à obtention d'une masse dure bullée. Cette dernière est ensuite passée à l'étuve à 250°C jusqu'à obtention d'une poudre. La poudre obtenue est enfin calcinée à 800°C pendant 6h. La poudre obtenue peut être utilisé pour préparer des films de cathode dans des batteries de type Li-ion.

b) <u>$LiMnPO_4$</u>

On broie dans un mortier une poudre de $Li_3PO_4$ et une poudre $MnSO_4.4H_2O$ en quantité stoechiométrique. La poudre broyée obtenue est placée dans un autoclave à 190°C pendant 12h. Le produit obtenu est lavé, centrifugé puis séché à 40°C pendant une nuit. La poudre obtenue peut être utilisé pour préparer des films de cathode dans des batteries de type Li-ion.

c) <u>$LiFePO_4$</u>

On broie dans un mortier une poudre $Li_3PO_4$ et une poudre $FeSO_4.7H_2O$ en quantité stoechiométrique. La poudre broyée obtenue est placée dans un autoclave à 190°C pendant 12h. Le produit obtenu est lavé, centrifugé puis séchée à 40°C pendant une nuit. La poudre obtenue peut être utilisé pour préparer des films de cathode dans des batteries de type Li-ion.

d) <u>$Li_{2,9}PO_{3,3}N_{0,36}/Li_{2,9}PO_{3,3}N_{0,46}$(LiPON)</u>

On place une poudre nanométrique de $Li_3PO_4$ non traitée thermiquement à haute température dans une nacelle en alumine placé dans un four tubulaire. La poudre est ensuite traitée thermiquement à 650°C pendant 2h sous atmosphère d'ammoniac. La poudre ainsi obtenue peut être utilisé pour préparer des films d'électrolyte dans des batteries de type Li-ion.

**Revendications**

1. Procédé de fabrication d'une couche d'électrode pour une batterie entièrement solide, comprenant les étapes de :

   a) Approvisionnement d'un substrat, de préférence conducteur,
   b) Dépôt d'une couche d'électrode par électrophorèse, à partir d'une suspension contenant des particules de matériau d'électrode, sur ledit substrat,
   c) Séchage de la couche obtenue à l'étape précédente,
   d) Densification thermique de la couche d'électrode obtenue à l'étape précédente par frittage, le frittage étant effectué à une température $T_R$ qui ne dépasse pas 0,7 fois la température de fusion exprimée en °C, plus préférentiellement ne dépasse pas 0,5 fois la température de fusion exprimée en °C et encore plus préférentiellement ne dépasse pas 0,3 fois la température de fusion exprimée en °C du matériau d'électrode le plus fusible, **caractérisé en ce que** la taille moyenne $D_{50}$ des particules de matériau d'électrode est inférieure à 100 nm et plus préférentiellement inférieure ou égale à 30 nm.

2. Procédé selon la revendication 1, **caractérisé en ce qu'**il comprend en outre une étape de compaction mécanique de la couche séchée, effectuée avant, après ou simultanément à l'étape de frittage, ladite étape de compaction mécanique étant de préférence réalisée par application d'une pression de compression comprise entre 20 et 100 MPa, de préférence comprise entre 40 et 60 MPa.

3. Procédé selon la revendication 1 ou 2, **caractérisé en ce que** l'étape de densification thermique et/ou mécanique est réalisée sous vide ou sous atmosphère inerte.

4. Procédé selon quelconque des revendications précédentes, **caractérisé en ce que** le substrat est un film d'aluminium.

5. Procédé selon l'une quelconque des revendications précédentes, **caractérisé en ce que** le dépôt par électrophorèse est effectué par anaphorèse.

6. Procédé selon l'une quelconque des revendications précédentes **caractérisé en ce que** la couche d'électrode déposée a une épaisseur inférieure à 20 $\mu$m, de préférence inférieure à environ 10 $\mu$m, et encore plus préférentiellement inférieure à 5 $\mu$m.

7. Procédé selon l'une quelconque des revendications précédentes, **caractérisé en ce que** les nanoparticules utilisées pour la réalisation de la couche d'électrode peuvent être choisies parmi un ou plusieurs des matériaux suivants :

   • les oxydes $LiMn_2O_4$, $LiCoO_2$, $LiNiO_2$, $LiMn_{1.5}Ni_{0.5}O_4$, $LiMn_1,5Ni_{0.5-x}X_xO_4$ où est sélectionné parmi Al, Fe, Cr, Co, Rh, Nd, autres terres rares, et où $0 < x < 0,1$, $LiFeO_2$, $LiMn_{1/3}Ni_{1/3}Co_{1/3}O_4$ ;
   • les phosphates $LiFePO_4$, $LiMnPO_4$, $LiCoPO_4$, $LiNiPO_4$, $Li_3V_2(PO_4)_3$ ;
   • toutes les formes lithiées des chalcogénides suivants : $V_2O_5$, $V_3O_8$, $TiS_2$, $TiO_yS_z$, $WO_yS_z$, $CuS$, $CuS_2$.

8. Procédé selon l'une quelconque des revendications précédentes, **caractérisé en ce que** les nanoparticules utilisées pour la réalisation de la couche d'électrode peuvent être choisies parmi un ou plusieurs des matériaux suivants :

   (i) les oxynitrures d'étain de formule typique $SNO_xN_y$;
   (ii) les oxynitrures mixtes de silicium et étain de formule typique $Si_aSn_bO_yN_z$ avec $a>0$, $b>0$, $a+b\leq2$, $0<y\leq4$, $0<z\leq3$ appelés aussi SITON, et en particulier le $SiSn_{0,87}O_{1,2}N_{1,72}$ ; ainsi que les oxynitrures sous la forme $Si_aSn_bC_cO_yN_z$ avec $a>0$, $b>0$, $a+b\leq2$, $0<c-10$, $0<y<24$, $0<z<17$; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.
   (iii) les nitrures de type $Si_xN_y$ en particulier avec $x=3$ et $y=4$, $Sn_xN_y$ en particulier avec $x=3$ et $y=4$, $Zn_xN_y$ en particulier avec $x=3$ et $y=4$, $Li_{3-x}M_xN$ avec M = Co, Ni, Cu;
   (iv) les oxydes $SnO_2$, $Li_4Ti_5O_{12}$, $SnB_{0,6}P_{0,4}O_{2,9}$.

9. Procédé selon l'une quelconque des revendications précédentes, **caractérisé en ce que** des nanoparticules conductrices électroniques et/ou conductrices des ions lithium sont déposées simultanément aux nanoparticules de matériaux d'électrode.

10. Procédé selon la revendication 9 **caractérisé en ce que** les nanoparticules conductrices sont constituées de matériaux céramiques ou vitrocéramiques choisis de préférence parmi les composés suivants :

(i) les composés lithiés à base d'oxynitrure de lithium et de phosphore appelés LiPON sous forme $Li_xPO_yN_z$ avec x ~2,8 et 2y+3z ~7,8 et $0,16 \leq z \leq 0,4$, et en particulier le $Li_{2,9}PO_{3,3}N_{0,46}$, mais également toutes les variantes sous forme $Li_wPO_xN_yS_z$ avec 2x+3y+2z = 5=w et $3,2 \leq x \leq 3,8$, $0,13 \leq y \leq 0,4$, $0 \leq z \leq 0,2$, $2,9 \leq w \leq 3,3$ ou sous forme $Li_tP_xAl_yO_uN_vS_w$ avec 5x+3y=5, 2u+3v+2w=5+t, $2,9 \leq t \leq 3,3$, $0,94 \leq x \leq 0,84$, $0,094 \leq y \leq 0,26$, $3,2 \leq u \leq 3,8$, $0,133 \leq v \leq 0,46$, $0 \leq w \leq 0,2$.
(ii) les composés lithiés à base d'oxynitrure de lithium, de phosphore et de silicium appelés LiSiPON et en particulier le $Li_{1,9}Si_{0,28}P_{1,0}O_{1,1}N_{1,0}$ ;
(iii) les oxynitrures de lithium de types LiBON, LiSiPON, LiSON, thio-LiSiCON, LiPONB où B, P et S représentent respectivement le bore, le phosphore et le soufre;
(iv) les composés $La_{0,51}Li_{0,34}Ti_{2,94}$, $Li_{3,4}V_{0,4}Geo_{0,6}O_4$, $Li_2O$-$Nb_2O_5$, $LiAlGaSPO_4$ ;
(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où $0 \leq x \leq 1$ et $0 \leq y \leq 1$), $Li_{1+x+z}M_x(Ge_{1-y}Ti_y)_{2-x}Si_zP_{3-z}O_{12}$ (où $0 \leq x \leq 0,8$ $0 \leq y \leq 1,0$ ; $0 \leq z \leq 0,6$), et en particulier les formulations 4,9LiI-34,1Li_2O-61 $B_2O_3$, $0,30Li_2S$-$0,26B_2S_3$-$0,44LiI$, $60Li_2S$-$40SiS_2$, $0,02Li_3PO_4$-$0,98(Li_2S$-$SiS_2)$, $2(Li_{1,4}Ti_2Si_{0,4}P_{2,6}O_{12})$-$AlPO_4$, $0,7Li_2S$-$0,3P_2S_5$.

11. Procédé selon l'une quelconque des revendications précédentes, **caractérisé en ce que** les suspensions de particules de matériaux d'électrode ont un extrait sec compris entre 2 et 20 g/L.

12. Procédé selon l'une quelconque des revendications précédentes, **caractérisé en ce que** les suspensions de particules de matériaux d'électrode ne contiennent pas de stabilisant.

13. Procédé selon l'une quelconque des revendications précédentes, **caractérisé en ce que** lesdites suspensions de particules de matériaux d'électrode comprennent en outre des nanoparticules de matériaux conducteurs électroniques, et en particulier de graphite, et/ou des matériaux conducteurs des ions lithium, et en particulier des matériaux plus fusibles que les matériaux d'électrode.

14. Utilisation d'un procédé selon l'une quelconque des revendications 1 à 13 dans la fabrication de batteries.

15. Couche d'électrode pour une batterie entièrement solide, susceptible d'être obtenue selon le procédé des revendications 1 à 14, **caractérisée en ce qu'**elle comprend au moins une phase constituée de matériaux actifs anodique ou cathodiques, et au moins une phase conducteur des ions lithium et / ou conducteur électronique, lesdites phases étant cristallisées avec une taille de grain comprise entre 1 et 100 nm.

## Patentansprüche

1. Verfahren zur Herstellung einer Elektrodenschicht für eine vollständig feste Batterie, das die folgenden Schritte umfasst:

a) Bereitstellen eines Substrats, das vorzugsweise leitend ist,
b) Abscheiden einer Elektrodenschicht durch Elektrophorese aus einer Suspension, die Elektrodenmaterialteilchen enthält, auf dem besagten Substrat,
c) Trocknen der im vorhergehenden Schritt erhaltenen Schicht,
d) thermisches Verdichten der im vorhergehenden Schritt erhaltenen Elektrodenschicht durch Sintern, wobei das Sintern bei einer Temperatur $T_R$ durchgeführt wird, die nicht das 0,7-fache der in °C ausgedrückten Schmelztemperatur, bevorzugt nicht das 0,5-fache der in °C ausgedrückten Schmelztemperatur, und noch mehr bevorzugt nicht das 0,3-fache der in °C ausgedrückten Schmelztemperatur des am besten schmelzbaren Elektrodenmaterials übersteigt,

**dadurch gekennzeichnet, dass** die durchschnittliche Größe $D_{50}$ von Elektrodenmaterialteilchen kleiner 100 nm und noch mehr bevorzugt kleiner gleich 30 nm ist.

**2.** Verfahren nach Anspruch 1, **dadurch gekennzeichnet, dass** es außerdem einen Schritt des mechanischen Verfestigens der getrockneten Schicht umfasst, der vor, nach oder gleichzeitig mit dem Sinterschritt durchgeführt wird, wobei der besagte Schritt des mechanischen Verfestigens durch Ausüben eines Komprimierungsdrucks zwischen 20 und 100 MPa, vorzugsweise zwischen 40 und 60 MPa umgesetzt wird.

**3.** Verfahren nach Anspruch 1 oder 2, **dadurch gekennzeichnet, dass** der Schritt des thermischen und/oder mechanischen Verdichtens unter Vakuum oder unter einer Inertatmosphäre umgesetzt wird.

**4.** Verfahren nach einem der vorhergehenden Ansprüche, **dadurch gekennzeichnet, dass** das Substrat eine Aluminiumfolie ist.

**5.** Verfahren nach einem der vorhergehenden Ansprüche, **dadurch gekennzeichnet, dass** das Abscheiden durch Elektrophorese durch Anaphorese durchgeführt wird.

**6.** Verfahren nach einem der vorhergehenden Ansprüche, **dadurch gekennzeichnet, dass** die abgeschiedene Elektrodenschicht eine Dicke von weniger als 20 $\mu$m, vorzugsweise weniger als ungefähr 10 $\mu$m und noch mehr bevorzugt weniger als 5 $\mu$m aufweist.

**7.** Verfahren nach einem der vorhergehenden Ansprüche, **dadurch gekennzeichnet, dass** die zur Umsetzung der Elektrodenschicht verwendeten Nanoteilchen aus einem oder mehreren der folgenden Materialien ausgewählt sein können:

- den Oxiden $LiMn_2O_4$, $LiCoO_2$, $LiNiO_2$, $LiMn_{1,5}Ni_{0,5}O_4$, $LiMn_{1,5}Ni_{0,5-x}X_xO_4$ wobei x aus Al, Fe, Cr, Co, Rh, Nd, anderen Seltenerdmetallen ausgewählt ist und wobei $0 < x < 0,1$ , $LiFeO_2$, $LiMn_{1/3}Ni_{1/3}Co_{1/3}O_4$;
- den Phosphaten $LiFePO_4$, $LiMnPO_4$, $LiCoPO_4$, $LiNiPO_4$, $Li_3V_2(PO_4)_3$;
- allen Lithiumformen der folgenden Chalcogenide: $V_2O_5$, $V_3O_8$, $TiS_2$, $TiO_yS_z$, $WO_yS_z$, CuS, $CuS_2$.

**8.** Verfahren nach einem der vorhergehenden Ansprüche, **dadurch gekennzeichnet, dass** die zur Umsetzung der Elektrodenschicht verwendeten Nanoteilchen aus einem oder mehreren der folgenden Materialien ausgewählt sein können:

(i) Zinnoxynitriden der typischen Formel $SnO_xN_y$;
(ii) Mischoxynitriden von Silicium und Zinn der typischen Formel $Si_aSn_bO_yN_z$, wobei $a > 0$, $b > 0$, $a+b \leq 2$, $0 < y \leq 4$, $0 < z \leq 3$ , auch SiTON genannt, und insbesondere $SiSn_{0,87}O_{1,2}N_{1,72}$; sowie den Oxynitriden in der Form $Si_aSn_bC_cO_yN_z$, wobei $a > 0$, $b > 0$, $a+b \leq 2$, $0 < c$-10, $0 < y < 24$, $0 < z <17$; $Si_aSn_bC_cOyN_zX_n$ und $Si_aSn_bO_yN_zX_n$, wobei Xn mindestens eines der Elemente von F, Cl, Br, I, S, Se, Te, P, As, Sb, Bi, Ge, Pb ist;
(iii) Nitriden des Typs $Si_xN_y$ insbesondere mit x = 3 und y = 4, $Sn_xN_y$ insbesondere mit x = 3 und y = 4, $Zn_xN_y$ insbesondere mit x = 3 und y = 4, $Li_{3-x}M_xN$ mit M = Co, Ni, Cu;
(iv) den Oxiden $SnO_2$, $Li_4Ti_5O_{12}$, $SnB_{0,6}P_{0,4}O_{2,9}$.

**9.** Verfahren nach einem der vorhergehenden Ansprüche, **dadurch gekennzeichnet, dass** Elektronen leitende und/oder Lithiumionen leitende Nanoteilchen gleichzeitig mit den Elektrodenmaterialnanoteilchen abgeschieden werden.

**10.** Verfahren nach Anspruch 9, **dadurch gekennzeichnet, dass** die leitenden Nanoteilchen aus Keramik- oder Vitrokeramikmaterialien bestehen, die vorzugsweise aus den folgenden Verbindungen ausgewählt sind:

(i) Lithiumverbindungen auf der Basis von Lithium- und Phosphoroxynitrid, LiPON genannt, in der Form $Li_x$-$PO_yN_z$, wobei x -2,8 und 2y+3z ~7,8 und $0,16 \leq z \leq 0,4$, und insbesondere $Li_{2,9}PO_{3,3}N_{0,46}$, aber auch alle Varianten in der Form $Li_wPO_xN_yS_z$, wobei 2x+3y+2z = 5 = w und $3,2 \leq x \leq 3,8$, $0,13 \leq y \leq 0,4$, $0 \leq z \leq 0,2$, $2,9 \leq w \leq 3,3$, oder in der Form $Li_tP_xAl_yO_uN_vS_w$, wobei 5x+3y = 5, 2u+3v+2w = 5+t, $2,9 \leq t \leq 3,3$, $0,94 \leq x \leq 0,84$, $0,094 \leq y \leq 0,26$, $3,2 \leq u \leq 3,8$, $0,13 \leq v \leq 0,46$, $0 \leq w \leq 0,2$;
(ii) Lithiumverbindungen auf der Basis von Lithium-, Phosphor- und Siliciumoxynitrid, LiSiPON genannt, und insbesondere $Li_{1,9}Si_{0,28}P_{1,0}O_{1,1}N_{1,0}$;
(iii) Lithiumoxynitriden der Typen LiBON, LiBSO, LiSiPON, LiSON, Thio-LiSiCON, LiPONB, wobei B, P und S für Bor, Phosphor bzw. Schwefel stehen;
(iv) den Verbindungen $La_{0,51}Li_{0,34}Ti_{2,94}$, $Li_{3,4}V_{0,4}Geo_{0,6}O_4$, $Li_2O$-$Nb_2O_5$, $LiAlGaSPO_4$;
(v) Formulierungen auf der Basis $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$,

$Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (wobei M = Ge, Ti und/oder Hf und wobei 0 < x < 1), $Li_{1+x+y}Al_xTi_{2-x}Si_yP_{3-y}O_{12}$ (wobei $0 \leq x \leq 1$ und $0 \leq y \leq 1$), $Li_{1+x+z}M_x(Ge_{1-y}Ti_y)_{2-x}Si_zP_{3-z}O_{12}$ (wobei $0 \leq x\ 0,8$; $0 \leq y \leq 1,0$ ; $0 \leq z \leq 0,6$), und insbesondere den Formulierungen 4, 9LiI-34, $1Li_2O-61B_2O_3$, 0, $30Li_2S-0$, $26B_2S_3-0$, 44LiI, $60Li_2S-40SiS_2$, 0, $02Li_3PO_4$-$0,98(Li_2S-SiS_2)$, $2(Li_{1,4}T1_2Si_{0,4}P_{2,6}O_{12})$-$AlPO_4$, $0,7Li_2S-0$, $3P_2S_5$.

11. Verfahren nach einem der vorhergehenden Ansprüche, **dadurch gekennzeichnet, dass** die Suspensionen von Elektrodenmaterialteilchen einen Trockenextrakt zwischen 2 und 20 g/L aufweisen.

12. Verfahren nach einem der vorhergehenden Ansprüche, **dadurch gekennzeichnet, dass** die Suspensionen von Elektrodenmaterialteilchen keinen Stabilisator enthalten.

13. Verfahren nach einem der vorhergehenden Ansprüche, **dadurch gekennzeichnet, dass** die besagten Suspensionen von Elektrodenmaterialteilchen außerdem Nanoteilchen von Elektronen leitenden Materialien und insbesondere von Graphit und/oder von Lithiumionen leitenden Materialien und insbesondere von am besten schmelzbaren Materialien als die Elektrodenmaterialien umfassen.

14. Verwendung eines Verfahrens nach einem der Ansprüche, 1 bis 13 in der Herstellung von Batterien.

15. Elektrodenschicht für eine vollständig feste Batterie, die durch das Verfahren nach Ansprüchen 1 bis 14 erhalten werden kann, **dadurch gekennzeichnet, dass** sie mindestens eine Phase, die aus anoden- oder kathodenaktiven Materialien besteht, und mindestens eine Lithiumionen leitende oder Elektronen leitende Phase umfasst, wobei die besagten Phasen mit einer Korngröße zwischen 1 und 100 nm kristallisiert werden.

## Claims

1. Method for the fabrication of an electrode film for an all-solid-state battery, comprising the steps of:

   a) procuring a substrate, preferably conductive,
   b) depositing an electrode film on said substrate by electrophoresis, from a suspension containing particles of electrode material,
   c) drying the film obtained in the previous step,
   d) thermal consolidation of the electrode film obtained in the previous step by sintering, the sintering being done at a temperature $T_R$ that does not exceed 0.7 times the melting point expressed in °C, more preferably does not exceed 0.5 times the melting point expressed in °C, and even more preferably does not exceed 0.3 times the melting point expressed in °C of the most fusible electrode material,

   **characterized in that** the mean size $D_{50}$ of the particles of electrode material is less than 100 nm and more preferably less than or equal to 30 nm.

2. Method according to claim 1, **characterized in that** it also comprises a step of mechanical compaction of the dried film, done before, after or simultaneously with the sintering step, said mechanical compacting step preferably being done by application of a compression pressure of between 20 and 100 MPa, and preferably between 40 and 60 MPa.

3. Method according to claim 1 or claim 2, **characterized in that** the thermal and/or mechanical compaction step is done under a vacuum or under an inert atmosphere.

4. Method according to any of the previous claims, **characterized in that** the substrate is an aluminum film.

5. Method according to any of the previous claims, **characterized in that** the electrophoretic deposition is done by anaphoresis.

6. Method according to any of the previous claims, **characterized in that** the thickness of the deposited electrode film is less than 20 μm, preferably less than about 10 μm, and even more preferably less than 5 μm.

7. Method according to any of the previous claims, **characterized in that** nanoparticles used for making the electrode film can be chosen from among one or more of the following materials:

- the oxides $LiMn_2O_4$, $LiCoO_2$, $LaNiO_2$, $LiMn_{1.5}Ni_{0.5}O_4$, $LiMn_{1.5}Ni_{0.5-x}X_xO_4$ where x is selected from among Al, Fe, Cr, Co, Rh, Nd, other rare earths, and where $0 < x < 0.1$, $LiFeO_2$, $LiMn_{1/3}Ni_{1/3}CO_{1/3}O_4$;
- the phosphates $LiFePO_4$, $LiMnPO_4$, $LiCoPO_4$, $LiNiPO_4$, $Li_3v_2(PO_4)_3$;
- all lithiated forms of the following chalcogenides: $V_2O_5$, $V_3O_8$, $TiS_2$, $TiO_yS_z$, $WO_yS_z$, CuS and $CuS_2$.

8. Method according to any of the previous claims, **characterized in that** the nanoparticles used for making the electrode film can be chosen from among one or more of the following materials:

(i) tin oxynitrides of typical formula $SnO_xN_y$;
(ii) mixed silicon and tin oxynitrides of typical formula $Si_aSn_bO_yN_z$ where a>0, b>0, a+b≤2, 0<y≤4, 0<z≤3, also called SiTON, and particularly $SiSn_{0.87}O_{1.2}N_{1.72}$; and oxynitrides in the form $Si_aSn_bC_cO_yN_z$ where a>0, b>0, a+b≤2, 0<c-10, 0<y<24. 0<z<17; $Si_aSn_bC_cO_yN_zX_n$ and $Si_aSn_bO_yN_zX_n$ where Xn is at least one of the elements F, Cl, Br, I, S, Se, Te, P, As, Sb, Bi, Ge, Pb;
(iii) nitrides of the type $Si_xN_y$ particularly in which x=3 and y=4, $Sn_xN_y$ particularly in which x=3 and y=4, $Zn_xN_y$ particularly in which x=3 and y=4, and $Li_{3-x}M_xN$ where M = Co, Ni, Cu;
(iv) the oxides $SnO_2$, $Li_4Ti_5O_{12}$, $SnB_{0.6}P_{0.4}O_{2.9}$.

9. Method according to any of the previous claims, **characterized in that** electron conducting and/or lithium ion conducting nanoparticles are deposited at the same time as electrode material nanoparticles.

10. Method according to claim 9, **characterized in that** the conductive nanoparticles are composed of ceramic and/or vitroceramic materials preferably chosen from among the following compounds:

(i) lithiated compounds based on lithium and phosphorus oxynitride called LiPON in the form $Li_xPOyN_z$ where x ~2.8 and 2y+3z ~7.8 and $0.16 \leq z \leq 0.4$, and in particular $Li_{2.9}PO_{3.3}N_{0.46}$, but also all variants in the form $Li_wPO_xN_yS_z$ where 2x+3y+2z = 5=w and $3.2 \leq x \leq 3.8$, $0.13 \leq y \leq 0.4$, $0 \leq z \leq 0.2$, $2.9 \leq w \leq 3.3$ or in the form $Li_tP_xAl_yO_uN_vS_w$ where 5x+3y=5, 2u+3v+2w=5+t, 2.9≤t≤3.3, 0.94≤x≤0.84, 0.094≤y≤0.26, 3.2≤u≤3.8, 0.133≤v≤0.46, 0≤w≤0.2;
(ii) lithiated compounds based on lithium, phosphorus and silicon oxynitride called LiSiPON, and particularly $Li_{1.9}Si_{0.28}P_{1.0}O_{1.1}N_{1.0}$;
(iii) lithium oxynitrides of the LiBON, LiBSO, LiSiPON, LiSON, thio-LiSiCON and LiPONB types where B, P and S represent boron, phosphorus and sulfur respectively;
(iv) the compounds $La_{0.51}Li_{0.34}Ti_{2.94}$· $Li_{3.4}V_{0.4}Ge_{0.6}O_4$, $Li_2O-Nb_2O_5$, $LiAlGaSPO_4$;
(v) the formulations based on $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3.6}Ge_{0.6}V_{0.4}O_4$, $LiTi_2(PO_4)_3$, $Li_{0.35}La_{0.55}TiO_3$, $Li_{3.25}Ge_{0.25}P_{0.25}S_4$, $Li_{1.3}Al_{0.3}Ti_{1.7}(PO_4)_3$, $Li_{1+x}Al_xM_{2-x}(PO_4)_3$ (where M = Ge, Ti, and/or Hf, and where 0 < x < 1), $Li_{1+x+y}Al_xTi_{2-x}Si_yP_{3-y}O_{12}$ (where 0≤x≤1 and 0≤y≤1), $Li_{1+x+z}M_x(Ge_{1-y}Ti_y)_{2-x}Si_zP_{3-z}O_{12}$ (where 0 ≤ x 0.8; 0 ≤ y ≤ 1.0; 0 ≤ z ≤ 0.6), and particularly the formulations 4.9LiI-34, $1Li_2O-61B_2O_3$, $0.30Li_2S-0.26B_2S_3-0.44LiI$, $60Li_2S-40SiS_2$, $0.02Li_3PO_4-0-98(Li_2S-SiS_2)$, 2$(Li_{1.4}Ti_2Si_{0.4}P_{2.6}O_{12})$ -$AlPO_4$, $0.7Li_2S-0.3P_2S_5$.

11. Method according to any of the previous claims, **characterized in that** the suspensions of particles of electrode materials have a dry extract of between 2 and 20 g/L.

12. Method according to any of the previous claims, **characterized in that** the suspensions of particles of electrode materials do not contain any stabilizers.

13. Method according to any of the previous claims, **characterized in that** said suspensions of particles of electrode materials also comprise nanoparticles of electron-conducting materials, and particularly graphite, and/or lithium ion conducting materials, and particularly materials more fusible than the electrode materials.

14. Use of a method according to any of claims 1 to 13 in the fabrication of batteries,

15. Electrode film for an all-solid-state battery, capable of being obtained by the method according to claims 1 to 14, **characterized in that** it comprises at least one phase composed of anodic or cathodic active materials, and at least one lithium ion conducting and/or electron conducting phase, said phases being crystallized with a size grain of between 1 and 100 nm.

Figure 1 (a)

Figure 1 (b)

Figure 1 (c)

Figure 1 (d)

Figure 1 (e)

Figure 2a

Figure 2a'

Figure 2b

Figure 2b'

Figure 3a

Figure 3a'

Figure 3b

Figure 3b'

Figure 4a

Figure 4b

Figure 4c

Figure 4d

Figure 5a

Figure 5b

Figure 5c

Figure 5d

Figure 5e

Figure 5f

Figure 6a

Figure 6b

Figure 6c

Figure 6d

Réaliser une suspension colloïdale des matériaux à déposer

Mettre en contact la surface à revêtir et la suspension colloïdale

Appliquer un champ électrique entre la surface à revêtir et une contre-électrode également située dans la suspension colloïdale le temps nécessaire pour obtenir la quantité déposée souhaitée

Sécher le revêtement

Fritter et/ou compacter le revêtement

Figure 7

Figure 8a

Figure 8b

Figure 9

17  2

1

Figure 10

**Fabrication de la cathode**  **Fabrication de l'anode**

1.A | Dépôt des particules « P+ » par électrophorèse | Dépôt des particules « P- » par électrophorèse | 1.B

2.A | Séchage des dépôts | Séchage des dépôts | 2.B

3.A | Densification des dépôts | Densification des dépôts | 3.B

4.A | Dépôt des particules « Pn » par électrophorèse | Dépôt des particules « Pn » par électrophorèse | 4.B

5.A | Séchage des dépôts | Séchage des dépôts | 5.B

6.A | Découpe sur 1 coté des électrodes revêtues | Découpe sur 1 coté des électrodes revêtues | 6.B

7 | Empilement

8 | Densification de la jonction électrolytique

Figure 11

76

77

Figure 12a

78

Figure 12b

79

Figure 12c

Densité relative

1

0,92 — Elimination de la porosité fermée

Elimination de la porosité ouverte

0,65 —

0,55 — Formation des ponts entre grains

Temps

Figure 12d

EP 2 774 194 B1

Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6887361 B
- US 2007184345 A
- WO 2007061928 A
- US 2008286651 A
- WO 2010011569 A
- US 7790967 B
- JP 4501247 B

**Littérature non-brevet citée dans la description**

- Advances in Lithium-Ion Batteries. Kluever Academic, 2002
- **JOHN NEWMAN.** Optimization of Porosity and Thickness of a Battery Electrode by Means of a Reaction-Zone Model. *J. Electrochem. Soc.,* Janvier 1995, vol. 142 (1
- **W. LIU ; G.C. FARRINGTON ; F. CHAPUT ; B. DUNN.** Synthesis and Electrochemical Studies of Spinel Phase LiMn2O4 Cathode Materials Prepared by the Pechini Process. *J. Electrochem. Soc.,* 1996, vol. 143 (3
- **M. KALBAC et al.** Phase-pure nanocrystalline Li4Ti5O12 for a lithium-ion battery. *J Solid State Electrochem,* 2003, vol. 8, 2-6